(19) Europäisches Patentamt / European Patent Office / Office européen des brevets

(11) **EP 4 528 547 A1**

(12) **EUROPEAN PATENT APPLICATION**
published in accordance with Art. 153(4) EPC

(43) Date of publication:
26.03.2025 Bulletin 2025/13

(51) International Patent Classification (IPC):
**G06F 16/9535** (2019.01)

(21) Application number: 23826382.6

(22) Date of filing: **20.06.2023**

(86) International application number:
**PCT/CN2023/101248**

(87) International publication number:
**WO 2023/246735 (28.12.2023 Gazette 2023/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.06.2022 CN 202210705920**

(71) Applicant: **Huawei Technologies Co., Ltd.**
**Shenzhen, Guangdong 518129 (CN)**

(72) Inventors:
• **GUO, Wei**
  **Shenzhen, Guangdong 518129 (CN)**
• **YUAN, Enming**
  **Shenzhen, Guangdong 518129 (CN)**
• **GUO, Huifeng**
  **Shenzhen, Guangdong 518129 (CN)**
• **TANG, Ruiming**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **ITEM RECOMMENDATION METHOD AND RELATED DEVICE THEREFOR**

(57) This application discloses an item recommendation method and a related device thereof. An item recommendation result output by a neural network model used by the method can have high accuracy, thereby helping optimize user experience. The method in this application is implemented by using a target model. The method in this application includes: obtaining N pieces of first information, where an $i^{th}$ piece of first information indicates an $i^{th}$ first item and an $i^{th}$ behavior, the $i^{th}$ behavior is a behavior of a user for the $i^{th}$ item, N behaviors of the user correspond to M categories, i = 1, ..., N, N ≥ M, and M > 1; processing the N pieces of first information based on a multi-head self-attention mechanism, to obtain N pieces of second information; and obtaining an item recommendation result based on the N pieces of second information, where the item recommendation result is used to determine, from K second items, a target item recommended to the user, and K ≥ 1.

Obtain N pieces of first information, where an $i^{th}$ piece of first information indicates an $i^{th}$ first item and an $i^{th}$ behavior, the $i^{th}$ behavior is a behavior of a user for the $i^{th}$ item, N behaviors of the user correspond to M categories, i = 1, ..., N, N ≥ M, and M > 1 — 401

Process the N pieces of first information by using a target model based on a multi-head self-attention mechanism, to obtain N pieces of second information — 402

Obtain an item recommendation result by using the target model based on the N pieces of second information, where the item recommendation result is used to determine, from K second items, a target item recommended to the user, and K ≥ 1 — 403

FIG. 4

EP 4 528 547 A1

## Description

This application claims priority to Chinese Patent Application No. 202210705920.8, filed with the China National Intellectual Property Administration on June 21, 2022, and entitled "ITEM RECOMMENDATION METHOD AND RELATED DEVICE THEREOF", which is incorporated herein by reference in its entirety.

## TECHNICAL FIELD

This application relates to artificial intelligence (artificial intelligence, AI) technologies, and in particular, to an item recommendation method and a related device thereof.

## BACKGROUND

With rapid development of computer technologies, to meet an Internet access requirement of a user, developers are increasingly inclined to display content of interest on a page of an application. In view of this, for an application, it is usually necessary to predict which item or items the user purchases, that is, recommend an item of interest to the user, to present these items on the page of the application, thereby providing a service for the user.

Currently, a neural network model of an AI technology can be used to predict an item that can be recommended to the user. Specifically, historical information of the user may be first collected, and the historical information indicates items that the user has interacted with and behaviors of the user for these items. Because there are a plurality types of behaviors of the user for the item, the historical information of the user may be classified based on the types of behaviors, and various types of information are separately processed by using the neural network model, to obtain processing results of the various types of information. Finally, the processing results of the various types of information may be superimposed to obtain an item recommendation result, thereby determining a target item to be recommended to the user.

In the foregoing process, when the neural network model processes information, mutual impact of a plurality of behaviors belonging to a same category is mainly considered, and factors that are considered are simple. As a result, accuracy of the item recommendation result finally output by the model is not high, affecting user experience.

## SUMMARY

Embodiments of this application provide an item recommendation method and a related device thereof. An item recommendation result output by a neural network model used by the method can have high accuracy, thereby helping optimize user experience.

A first aspect of embodiments of this application provides an item recommendation method. The method includes the following steps.

When a user uses an application, to display an item of interest on a page of the application, some historical data of previously using the application by the user may be first acquired, and N pieces of first information may be obtained based on the historical data. An $i^{th}$ piece of first information indicates an $i^{th}$ first item (that is, a historical item) that has been operated by the user when the user uses the application and an $i^{th}$ behavior. The $i^{th}$ behavior may be understood as a behavior performed by the user when the user operates the $i^{th}$ item. N behaviors performed by the user may be classified into M categories. i = 1, ..., N, N $\geq$ M, and M > 1. For example, when the user uses shopping software, to predict a commodity that can be recommended to the user, five pieces of first information generated when the user uses the software previously may be obtained. A $1^{st}$ piece of first information indicates a piece of clothing and a click behavior of the user on the clothing. A $2^{nd}$ piece of first information indicates a pair of shoes and an add-to-favorites behavior of the user on the shoes. A $3^{rd}$ piece of first information indicates a hat and a purchase behavior of the user on the hat. A $4^{th}$ piece of first information indicates a pair of trousers and a click behavior of the user on the trousers. A $5^{th}$ piece of first information indicates another pair of trousers and a purchase behavior of the user on the trousers. It can be learned that the five behaviors of the user on the five commodities may be classified into three types: a tap behavior, an add-to-favorites behavior, and a purchase behavior.

After the N pieces of first information are obtained, the N pieces of first information may be input into a target model, so that the target model may process the N pieces of first information based on a multi-head self-attention mechanism, to correspondingly obtain N pieces of second information. After the N pieces of second information are obtained, the target model may obtain an item recommendation result based on the N pieces of second information. The item recommendation result may be used to determine, from K second items (that is, candidate items), a target item recommended to the user, and K $\geq$ 1.

It can be learned from the foregoing method that, when the target item of interest needs to be recommended to the user, the N pieces of first information may be first input to the target model. The $i^{th}$ piece of first information indicates the $i^{th}$ first item and the $i^{th}$ behavior. The $i^{th}$ behavior is a behavior of the user for the $i^{th}$ item. The N behaviors of the user correspond to M categories. i = 1, ..., N ≥ M, and M > 1. Then, the N pieces of first information may be processed by using the target model based on the multi-head self-attention mechanism, to obtain the N pieces of second information. Finally, the item recommendation result can be obtained by using the target model based on the N pieces of second information. The item recommendation result is used to determine, from the K second items, the target item recommended to the user, and K ≥ 1. In the foregoing process, the N pieces of first information not only indicate N first items, but also indicate the N behaviors that can be classified into the M categories. Therefore, in a process in which the target model processes the N pieces of first information to correspondingly obtain the N pieces of second information, not only mutual impact of a plurality of behaviors belonging to a same category and mutual impact of a plurality of first items may be considered, but also mutual impact of a plurality of behaviors belonging to different categories may be considered. Factors that are considered are comprehensive. Therefore, the item recommendation result output by the target model based on the N pieces of second information can have high accuracy, thereby helping optimize user experience.

In a possible implementation, processing the N pieces of first information based on the multi-head attention mechanism, to obtain the N pieces of second information includes: performing linear processing on the $i^{th}$ piece of first information, to obtain an $i^{th}$ piece of Q information, an $i^{th}$ piece of K information, and an $i^{th}$ piece of V information; and performing an operation on the $i^{th}$ piece of Q information, N pieces of K information, N pieces of V information, and N pieces of weight information corresponding to the $i^{th}$ behavior, to obtain an $i^{th}$ piece of second information, where a $j^{th}$ piece of weight information corresponding to the $i^{th}$ behavior is determined based on the $i^{th}$ behavior and a $j^{th}$ behavior, and j = 1, ..., N. In the foregoing implementation, after the N pieces of first information are received, for any one of the N pieces of first information, that is, the $i^{th}$ piece of first information, the target model may first perform linear processing on the $i^{th}$ piece of first information, to obtain the $i^{th}$ piece of Q information, the $i^{th}$ piece of K information, and the $i^{th}$ piece of V information. For the remaining first information other than the $i^{th}$ piece of first information, the target model may also perform an operation similar to that performed on the $i^{th}$ piece of first information. Therefore, a total of N pieces of Q information, N pieces of K information, and N pieces of V information can be obtained. To be specific, the target model may perform linear processing on the $1^{st}$ piece of first information, to obtain a $1^{st}$ piece of Q information, a $1^{st}$ piece of K information, and a $1^{st}$ piece of V information, may further perform linear processing on the $2^{nd}$ piece of first information, to obtain a $2^{nd}$ piece of Q information, a $2^{nd}$ piece of K information, a $2^{nd}$ piece of V information, ..., and may further perform linear processing on an $N^{th}$ piece of first information, to obtain an $N^{th}$ piece of Q information, an $N^{th}$ piece of K information, and an $N^{th}$ piece of V information.

For the $i^{th}$ piece of Q information, the target model may perform an operation on the $i^{th}$ piece of Q information, the N pieces of K information, the N pieces of V information, and the N pieces of weight information corresponding to the $i^{th}$ behavior, to obtain the $i^{th}$ piece of second information. The $j^{th}$ piece of weight information corresponding to the $i^{th}$ behavior is determined based on the $i^{th}$ behavior and the $j^{th}$ behavior, and j = 1, ..., N. For the remaining Q information other than the $i^{th}$ piece of Q information, the target model may also perform an operation similar to that performed on the $i^{th}$ piece of Q information. Therefore, the N pieces of second information can be obtained. To be specific, the target model may first perform an operation on the $1^{st}$ piece of Q information, the N pieces of K information, the N pieces of V information, and N pieces of weight information corresponding to a $1^{st}$ behavior, to obtain a $1^{st}$ piece of second information, the target model may further perform an operation on the $2^{nd}$ piece of Q information, the N pieces of K information, the N pieces of V information, and N pieces of weight information corresponding to a $2^{nd}$ behavior, to obtain a $2^{nd}$ piece of second information, ..., and the target model may further perform an operation on the $N^{th}$ piece of Q information, the N pieces of K information, the N pieces of V information, and N pieces of weight information corresponding to an $N^{th}$ behavior, to obtain an $N^{th}$ piece of second information. A $1^{st}$ piece of weight information corresponding to the $1^{st}$ behavior is determined based on the $1^{st}$ behavior, a $2^{nd}$ piece of weight information corresponding to the $1^{st}$ behavior is determined based on the $1^{st}$ behavior and the $2^{nd}$ behavior, ..., an $N^{th}$ piece of weight information of the $1^{st}$ behavior is determined based on the $1^{st}$ behavior and the $N^{th}$ behavior, ..., a $1^{st}$ piece of weight information corresponding to the $N^{th}$ behavior is determined based on the $N^{th}$ behavior and the $1^{st}$ behavior, a $2^{nd}$ piece of weight information corresponding to the $N^{th}$ behavior is determined based on the $N^{th}$ behavior and the $2^{nd}$ behavior, ..., and an $N^{th}$ piece of weight information of the $N^{th}$ behavior is determined based on the $N^{th}$ behavior.

In a possible implementation, the method further includes: obtaining N pieces of third information, where an $i^{th}$ piece of third information indicates the $i^{th}$ behavior; and performing an operation on the $i^{th}$ piece of third information and the N pieces of third information, to obtain N pieces of fourth information corresponding to the $i^{th}$ behavior, where a $j^{th}$ piece of fourth information corresponding to the $i^{th}$ behavior indicates a distance between the $i^{th}$ behavior and the $j^{th}$ behavior. The performing an operation on the $i^{th}$ piece of Q information, N pieces of K information, N pieces of V information, and N pieces of weight information corresponding to the $i^{th}$ behavior, to obtain an $i^{th}$ piece of second information includes: performing an operation on the $i^{th}$ piece of Q information, the N pieces of K information, the N pieces of V information, the N pieces of weight information corresponding to the $i^{th}$ behavior, and the N pieces of fourth information corresponding to the $i^{th}$ behavior, to obtain the $i^{th}$ piece of second information. In the foregoing implementation, after the N pieces of third information are received, for any one of the N pieces of third information, that is, the $i^{th}$ piece of third information, the target model may perform an operation on the $i^{th}$ piece of third information and the N pieces of third information, to obtain the N pieces of fourth information corresponding to the $i^{th}$ behavior. The $j^{th}$ piece of fourth information corresponding to the $i^{th}$ behavior indicates a distance between the $i^{th}$ behavior and the $j^{th}$ behavior. For the remaining third information other than the $i^{th}$ piece of third information, the target model may also perform an operation similar to that performed on the $i^{th}$ piece of third information. Therefore, a total of N pieces of fourth information corresponding to the $1^{st}$ behavior, N pieces of fourth information corresponding to the $2^{nd}$ behavior, ..., and N pieces of fourth information corresponding to the $N^{th}$ behavior can be obtained. To be specific, the target model may perform an operation on the $1^{st}$ piece of third information and the $1^{st}$ piece of third information to obtain a $1^{st}$ piece of fourth information (indicating a distance between $1^{st}$ behaviors) corresponding to the $1^{st}$ behavior, may further perform an operation on the $1^{st}$ piece of third information and a $2^{nd}$ piece of third information to obtain a $2^{nd}$ piece of fourth information (indicating a distance between the $1^{st}$ behavior and the $2^{nd}$ behavior) corresponding to the $1^{st}$ behavior, ..., may further perform an operation on the $1^{st}$ piece of third information and an $N^{th}$ piece of third information to obtain an $N^{th}$ piece of fourth information (indicating a distance between the $1^{st}$ behavior and the $N^{th}$ behavior) corresponding to the $1^{st}$ behavior, ..., may further perform an operation on the $N^{th}$ piece of third information and the $1^{st}$ piece of third information to obtain a $1^{st}$ piece of fourth information (indicating a distance between the $N^{th}$ behavior and the $1^{st}$ behavior) corresponding to the $N^{th}$ behavior, may further perform an operation on the $N^{th}$ piece of third information and the $2^{nd}$ piece of third information to obtain a $2^{nd}$ piece of fourth information (indicating a distance between the $N^{th}$ behavior and the $2^{nd}$ behavior) corresponding to the $N^{th}$ behavior, ..., and may further perform an operation on the $N^{th}$ piece of third information and the $N^{th}$ piece of third information to obtain an $N^{th}$ piece of fourth information (indicating a distance between $N^{th}$ behaviors) corresponding to the $N^{th}$ behavior. In this case, for the $i^{th}$ piece of Q information, the target model may perform an operation on the $i^{th}$ piece of Q information, the N pieces of K information, the N pieces of V information, the N pieces of weight information corresponding to the $i^{th}$ behavior, and the N pieces of fourth information corresponding to the $i^{th}$ behavior, to obtain the $i^{th}$ piece of second information. For the remaining Q information other than the $i^{th}$ piece of Q information, the target model may also perform an operation similar to that performed on the $i^{th}$ piece of Q information. Therefore, the N pieces of second information can be obtained. To be specific, the target model may first perform an operation on the $1^{st}$ piece of Q information, the N pieces of K information, the N pieces of V information, the N pieces of weight information corresponding to the $1^{st}$ behavior, and the N pieces of fourth information corresponding to the $1^{st}$ behavior to obtain the $1^{st}$ piece of second information, the target model may further perform an operation on the $2^{nd}$ piece of Q information, the N pieces of K information, the N pieces of V information, the N pieces of weight information corresponding to the $2^{nd}$ behavior, and the N pieces of fourth information corresponding to the $2^{nd}$ behavior to obtain the $2^{nd}$ piece of second information, ..., and the target model may further perform an operation on the $N^{th}$ piece of Q information, the N pieces of K information, the N pieces of V information, the N pieces of weight information corresponding to the $N^{th}$ behavior, and the N pieces of fourth information corresponding to the $N^{th}$ behavior to obtain the $N^{th}$ piece of second information. It can be learned that, in a process of processing the N pieces of first information based on the multi-head self-attention mechanism, the target model further considers impact caused by a distance between orders of different behaviors. Factors that are considered are more comprehensive in comparison with a related technology. The item recommendation result output by the target model may also accurately fit a real intention of the user, thereby further improving accuracy of the item recommendation result.

In a possible implementation, the distance between the $i^{th}$ behavior and the $j^{th}$ behavior includes an interval between an order of the $i^{th}$ behavior and an order of the $j^{th}$ behavior, for example, an interval between a time at which the user performs the $i^{th}$ behavior and a time at which the user performs the $j^{th}$ behavior.

In a possible implementation, obtaining the item recommendation result based on the N pieces of second information includes: performing feature extraction on the N pieces of second information to obtain fifth information and sixth information, where the fifth information indicates a difference between the N behaviors, and the sixth information indicates a same point between the N behaviors; fusing the fifth information and the sixth information to obtain seventh information, where the seventh information indicates interest distribution of the user; and calculating matching degrees between the seventh information and K pieces of eighth information, where the matching degree is used as the item recommendation result, a $t^{th}$ piece of eighth information indicates a $t^{th}$ second item, and t = 1, ..., K. In the foregoing implementation, after the N pieces of second information are obtained, the target model may perform feature extraction on the N pieces of second information in one manner, to obtain the fifth information. The fifth information includes an exclusive characteristic of each of the N behaviors. Therefore, the fifth information may be used by the fifth information to indicate a difference between the N behaviors. At the same time, the target model may further perform feature extraction on the N pieces of second information in another manner, to obtain the sixth information. The sixth information includes a common characteristic of the N behaviors. Therefore, the sixth information may indicate a same point between the N behaviors. After the fifth information and the sixth information are obtained, the target model may perform weighted summation on the fifth information and the sixth information to obtain the seventh information. The seventh information is a behavior representation of the user. Therefore, the seventh information may indicate interest distribution of the user. After the seventh information is obtained, the target model may further obtain the K pieces of eighth information. The $t^{th}$ piece of eighth information indicates the $t^{th}$ second item, and t = 1, ..., K. In the K pieces of eighth information, the target model may calculate a matching degree between the seventh information and the $t^{th}$ piece of eighth information. For eighth information other than the $t^{th}$ piece of eighth information, the target model may also perform an operation similar to that performed on the $t^{th}$ piece of eighth information. Therefore, the matching degrees between the seventh information and the K pieces of eighth information can be obtained. Therefore, these matching degrees can be used as final item recommendation results output by the target model. It can be learned that the target model may perform deeper information mining on a processing result of the multi-head self-attention mechanism, to mine exclusive information of a plurality of behaviors of the user and common information of the plurality of behaviors, thereby constructing a behavior representation of the user. In this case, an item that can match the behavior representation of the user may be used as the target item recommended to the user, so that accuracy of item recommendation can be improved.

In a possible implementation, the K second items include the N first items.

A second aspect of embodiments of this application provides a model training method. The method includes: inputting N pieces of first information into a to-be-trained model to obtain a predicted item recommendation result, where the to-be-trained model is configured to: obtain the N pieces of first information, where an $i^{th}$ piece of first information indicates an $i^{th}$ first item and an $i^{th}$ behavior, the $i^{th}$ behavior is a behavior of a user for the $i^{th}$ item, N behaviors of the user correspond to M categories, i = 1, ..., N, N ≥ M, and M > 1; process the N pieces of first information based on a multi-head attention mechanism, to obtain N pieces of second information; and obtain the predicted item recommendation result based on the N pieces of second information, where the predicted item recommendation result is used to determine, from K second items, a target item recommended to the user, and K ≥ 1; obtaining a target loss based on the predicted item recommendation result and a real item recommendation result, where the target loss indicates a difference between the predicted item recommendation result and the real item recommendation result; and updating a parameter of the to-be-trained model based on the target loss until a model training condition is met, to obtain a target model.

The target model obtained through training in the foregoing method has a function of recommending an item to the user. When the target item of interest needs to be recommended to the user, the N pieces of first information may be first input to the target model. The $i^{th}$ piece of first information indicates the $i^{th}$ first item and the $i^{th}$ behavior. The $i^{th}$ behavior is a behavior of the user for the $i^{th}$ item. The N behaviors of the user correspond to M categories. i = 1, ..., N ≥ M, and M > 1. Then, the N pieces of first information may be processed by using the target model based on the multi-head self-attention mechanism, to obtain the N pieces of second information. Finally, the item recommendation result can be obtained by using the target model based on the N pieces of second information. The item recommendation result is used to determine, from the K second items, the target item recommended to the user, and K ≥ 1. In the foregoing process, the N pieces of first information not only indicate N first items, but also indicate the N behaviors that can be classified into the M categories. Therefore, in a process in which the target model processes the N pieces of first information to correspondingly obtain the N pieces of second information, not only mutual impact of a plurality of behaviors belonging to a same category and mutual impact of a plurality of first items may be considered, but also mutual impact of a plurality of behaviors belonging to different categories may be considered. Factors that are considered are comprehensive. Therefore, the item recommendation result output by the target model based on the N pieces of second information can have high accuracy, thereby helping optimize user experience.

In a possible implementation, the to-be-trained model is configured to: perform linear processing on the $i^{th}$ piece of first information, to obtain an $i^{th}$ piece of Q information, an $i^{th}$ piece of K information, and an $i^{th}$ piece of V information; and perform an operation on the $i^{th}$ piece of Q information, N pieces of K information, N pieces of V information, and N pieces of weight information corresponding to the $i^{th}$ behavior, to obtain an $i^{th}$ piece of second information, where a $j^{th}$ piece of weight information corresponding to the $i^{th}$ behavior is determined based on the $i^{th}$ behavior and a $j^{th}$ behavior, and j = 1, ..., N.

In a possible implementation, the to-be-trained model is further configured to: obtain N pieces of third information, where an $i^{th}$ piece of third information indicates the $i^{th}$ behavior; and perform an operation on the $i^{th}$ piece of third information and the N pieces of third information, to obtain N pieces of fourth information corresponding to the $i^{th}$ behavior, where a $j^{th}$ piece of fourth information corresponding to the $i^{th}$ behavior indicates a distance between the $i^{th}$ behavior and the $j^{th}$ behavior. The to-be-trained model is configured to perform an operation on the $i^{th}$ piece of Q information, the N pieces of K information, the N pieces of V information, the N pieces of weight information corresponding to the $i^{th}$ behavior, and the N pieces of fourth information corresponding to the $i^{th}$ behavior, to obtain the $i^{th}$ piece of second information.

In a possible implementation, the distance between the $i^{th}$ behavior and the $j^{th}$ behavior includes an interval between an order of the $i^{th}$ behavior and an order of the $j^{th}$ behavior.

In a possible implementation, the to-be-trained model is configured to: perform feature extraction on the N pieces of second information to obtain fifth information and sixth information, where the fifth information indicates a difference between the N behaviors, and the sixth information indicates a same point between the N behaviors; fuse the fifth information and the sixth information to obtain seventh information, where the seventh information indicates interest distribution of the user; and calculate matching degrees between the seventh information and K pieces of eighth information, where the matching degree is used as the item recommendation result, a $t^{th}$ piece of eighth information indicates a $t^{th}$ second item, and t = 1, ..., K.

In a possible implementation, the K second items include the N first items.

A third aspect of embodiments of this application provides an item recommendation apparatus. The apparatus includes: a first obtaining module, configured to obtain N pieces of first information by using a target model, where an $i^{th}$ piece of first information indicates an $i^{th}$ first item and an $i^{th}$ behavior, the $i^{th}$ behavior is a behavior of a user for the $i^{th}$ item, N behaviors of the user correspond to M categories, $i = 1, ..., N$, $N \geq M$, and $M > 1$; a processing module, configured to process the N pieces of first information by using the target model based on a multi-head self-attention mechanism, to obtain N pieces of second information; and a second obtaining module, configured to obtain an item recommendation result by using the target model based on the N pieces of second information, where the item recommendation result is used to determine, from K second items, a target item recommended to the user, and $K \geq 1$.

It can be learned from the foregoing apparatus that, when the target item of interest needs to be recommended to the user, the N pieces of first information may be first input to the target model. The $i^{th}$ piece of first information indicates the $i^{th}$ first item and the $i^{th}$ behavior. The $i^{th}$ behavior is a behavior of the user for the $i^{th}$ item. The N behaviors of the user correspond to M categories. $i = 1, ..., N \geq M$, and $M > 1$. Then, the N pieces of first information may be processed by using the target model based on the multi-head self-attention mechanism, to obtain the N pieces of second information. Finally, the item recommendation result can be obtained by using the target model based on the N pieces of second information. The item recommendation result is used to determine, from the K second items, the target item recommended to the user, and $K \geq 1$. In the foregoing process, the N pieces of first information not only indicate N first items, but also indicate the N behaviors that can be classified into the M categories. Therefore, in a process in which the target model processes the N pieces of first information to correspondingly obtain the N pieces of second information, not only mutual impact of a plurality of behaviors belonging to a same category and mutual impact of a plurality of first items may be considered, but also mutual impact of a plurality of behaviors belonging to different categories may be considered. Factors that are considered are comprehensive. Therefore, the item recommendation result output by the target model based on the N pieces of second information can have high accuracy, thereby helping optimize user experience.

In a possible implementation, the processing module is configured to: perform linear processing on the $i^{th}$ piece of first information by using the target model, to obtain an $i^{th}$ piece of Q information, an $i^{th}$ piece of K information, and an $i^{th}$ piece of V information; and perform an operation on the $i^{th}$ piece of Q information, N pieces of K information, N pieces of V information, and N pieces of weight information corresponding to the $i^{th}$ behavior by using the target model, to obtain an $i^{th}$ piece of second information, where a $j^{th}$ piece of weight information corresponding to the $i^{th}$ behavior is determined based on the $i^{th}$ behavior and a $j^{th}$ behavior, and $j = 1, ..., N$.

In a possible implementation, the apparatus further includes: a third obtaining module, configured to obtain N pieces of third information by using the target model, where an $i^{th}$ piece of third information indicates the $i^{th}$ behavior; an operation module, configured to perform an operation on the $i^{th}$ piece of third information and the N pieces of third information by using the target model to obtain N pieces of fourth information corresponding to the $i^{th}$ behavior, where a $j^{th}$ piece of fourth information corresponding to the $i^{th}$ behavior indicates a distance between the $i^{th}$ behavior and the $j^{th}$ behavior; and a processing module, configured to perform an operation on the $i^{th}$ piece of Q information, the N pieces of K information, the N pieces of V information, the N pieces of weight information corresponding to the $i^{th}$ behavior, and the N pieces of fourth information corresponding to the $i^{th}$ behavior by using the target model, to obtain the $i^{th}$ piece of second information.

In a possible implementation, the distance between the $i^{th}$ behavior and the $j^{th}$ behavior includes an interval between an order of the $i^{th}$ behavior and an order of the $j^{th}$ behavior.

In a possible implementation, the second obtaining module is configured to: perform feature extraction on the N pieces of second information by using the target model to obtain fifth information and sixth information, where the fifth information indicates a difference between the N behaviors, and the sixth information indicates a same point between the N behaviors; fuse the fifth information and the sixth information by using the target model to obtain seventh information, where the seventh information indicates interest distribution of the user; and calculate matching degrees between the seventh information and K pieces of eighth information by using the target model, where the matching degree is used as the item recommendation result, a $t^{th}$ piece of eighth information indicates a $t^{th}$ second item, and $t = 1, ..., K$.

In a possible implementation, the K second items include the N first items.

A fourth aspect of embodiments of this application provides a model training apparatus, where the apparatus includes: a processing module, configured to input N pieces of first information into a to-be-trained model to obtain a predicted item recommendation result, where the to-be-trained model is configured to: obtain the N pieces of first information, where an $i^{th}$ piece of first information indicates an $i^{th}$ first item and an $i^{th}$ behavior, the $i^{th}$ behavior is a behavior of a user for the $i^{th}$ item, N behaviors of the user correspond to M categories, $i = 1, ..., N$, $N \geq M$, and $M > 1$; process the N pieces of first information based on a multi-head attention mechanism, to obtain N pieces of second information; and obtain the predicted item recommendation result based on the N pieces of second information, where the predicted item recommendation result is used to determine, from K second items, a target item recommended to the user, and $K \geq 1$; an obtaining module, configured to obtain a target loss based on the predicted item recommendation result and a real item recommendation result, where the target loss indicates a difference between the predicted item recommendation result and the real item recommendation result; and an updating module, configured to update a parameter of the to-be-trained model based on the target loss until a model training condition is met, to obtain a target model.

The target model obtained through training by the apparatus has a function of recommending an item to the user. When the target item of interest needs to be recommended to the user, the N pieces of first information may be first input to the target model. The $i^{th}$ piece of first information indicates the $i^{th}$ first item and the $i^{th}$ behavior. The $i^{th}$ behavior is a behavior of the user for the $i^{th}$ item. The N behaviors of the user correspond to M categories. $i = 1, ..., N \geq M$, and $M > 1$. Then, the N pieces of first information may be processed by using the target model based on the multi-head self-attention mechanism, to obtain the N pieces of second information. Finally, the item recommendation result can be obtained by using the target model based on the N pieces of second information. The item recommendation result is used to determine, from the K second items, the target item recommended to the user, and $K \geq 1$. In the foregoing process, the N pieces of first information not only indicate N first items, but also indicate the N behaviors that can be classified into the M categories. Therefore, in a process in which the target model processes the N pieces of first information to correspondingly obtain the N pieces of second information, not only mutual impact of a plurality of behaviors belonging to a same category and mutual impact of a plurality of first items may be considered, but also mutual impact of a plurality of behaviors belonging to different categories may be considered. Factors that are considered are comprehensive. Therefore, the item recommendation result output by the target model based on the N pieces of second information can have high accuracy, thereby helping optimize user experience.

In a possible implementation, the to-be-trained model is configured to: perform linear processing on the $i^{th}$ piece of first information, to obtain an $i^{th}$ piece of Q information, an $i^{th}$ piece of K information, and an $i^{th}$ piece of V information; and perform an operation on the $i^{th}$ piece of Q information, N pieces of K information, N pieces of V information, and N pieces of weight information corresponding to the $i^{th}$ behavior, to obtain an $i^{th}$ piece of second information, where a $j^{th}$ piece of weight information corresponding to the $i^{th}$ behavior is determined based on the $i^{th}$ behavior and a $j^{th}$ behavior, and $j = 1, ..., N$.

In a possible implementation, the to-be-trained model is further configured to: obtain N pieces of third information, where an $i^{th}$ piece of third information indicates the $i^{th}$ behavior; and perform an operation on the $i^{th}$ piece of third information and the N pieces of third information to obtain N pieces of fourth information corresponding to the $i^{th}$ behavior, where a $j^{th}$ piece of fourth information corresponding to the $i^{th}$ behavior indicates a distance between the $i^{th}$ behavior and the $j^{th}$ behavior. The to-be-trained model is configured to perform an operation on the $i^{th}$ piece of Q information, the N pieces of K information, the N pieces of V information, the N pieces of weight information corresponding to the $i^{th}$ behavior, and the N pieces of fourth information corresponding to the $i^{th}$ behavior, to obtain the $i^{th}$ piece of second information.

In a possible implementation, the distance between the $i^{th}$ behavior and the $j^{th}$ behavior includes an interval between an order of the $i^{th}$ behavior and an order of the $j^{th}$ behavior.

In a possible implementation, the to-be-trained model is configured to: perform feature extraction on the N pieces of second information to obtain fifth information and sixth information, where the fifth information indicates a difference between the N behaviors, and the sixth information indicates a same point between the N behaviors; fuse the fifth information and the sixth information to obtain seventh information, where the seventh information indicates interest distribution of the user; and calculate matching degrees between the seventh information and K pieces of eighth information, where the matching degree is used as the item recommendation result, a $t^{th}$ piece of eighth information indicates a $t^{th}$ second item, and $t = 1, ..., K$.

In a possible implementation, the K second items include the N first items.

A fifth aspect of embodiments of this application provides an item recommendation apparatus. The apparatus includes a memory and a processor. The memory stores code, and the processor is configured to execute the code. When the code is executed, the item recommendation apparatus performs the method according to any one of the first aspect or the possible implementations of the first aspect.

A sixth aspect of embodiments of this application provides a model training apparatus. The apparatus includes a memory and a processor. The memory stores code, and the processor is configured to execute the code. When the code is executed, the model training apparatus performs the method according to any one of the second aspect or the possible implementations of the second aspect.

A seventh aspect of embodiments of this application provides a circuit system. The circuit system includes a processing circuit. The processing circuit is configured to perform the method according to any one of the first aspect, the possible implementations of the first aspect, the second aspect, or the possible implementations of the second aspect.

An eighth aspect of embodiments of this application provides a chip system. The chip system includes a processor, configured to invoke a computer program or computer instructions stored in a memory, so that the processor performs the method according to any one of the first aspect, the possible implementations of the first aspect, the second aspect, or the possible implementations of the second aspect.

In a possible implementation, the processor is coupled to the memory through an interface.

In a possible implementation, the chip system further includes the memory. The memory stores the computer program or the computer instructions.

A ninth aspect of embodiments of this application provides a computer storage medium. The computer storage medium stores a computer program. When the program is executed by a computer, the computer is enabled to perform the method according to any one of the first aspect, the possible implementations of the first aspect, the second aspect, or the possible implementations of the second aspect.

A tenth aspect of embodiments of this application provides a computer program product. The computer program product stores instructions. When the instructions are executed by a computer, the computer is enabled to perform the method according to any one of the first aspect, the possible implementations of the first aspect, the second aspect, or the possible implementations of the second aspect.

In embodiments of this application, when the target item of interest needs to be recommended to the user, the N pieces of first information may be first input to the target model. The $i^{th}$ piece of first information indicates the $i^{th}$ first item and the $i^{th}$ behavior. The $i^{th}$ behavior is a behavior of the user for the $i^{th}$ item. The N behaviors of the user correspond to M categories. i = 1, ..., N $\geq$ M, and M > 1. Then, the N pieces of first information may be processed by using the target model based on the multi-head self-attention mechanism, to obtain the N pieces of second information. Finally, the item recommendation result can be obtained by using the target model based on the N pieces of second information. The item recommendation result is used to determine, from the K second items, the target item recommended to the user, and K $\geq$ 1. In the foregoing process, the N pieces of first information not only indicate N first items, but also indicate the N behaviors that can be classified into the M categories. Therefore, in a process in which the target model processes the N pieces of first information to correspondingly obtain the N pieces of second information, not only mutual impact of a plurality of behaviors belonging to a same category and mutual impact of a plurality of first items may be considered, but also mutual impact of a plurality of behaviors belonging to different categories may be considered. Factors that are considered are comprehensive. Therefore, the item recommendation result output by the target model based on the N pieces of second information can have high accuracy, thereby helping optimize user experience.

## BRIEF DESCRIPTION OF DRAWINGS

FIG. 1 is a diagram of a structure of an artificial intelligence main framework;
FIG. 2a is a diagram of a structure of an item recommendation system according to an embodiment of this application;
FIG. 2b is a diagram of another structure of an item recommendation system according to an embodiment of this application;
FIG. 2c is a diagram of an item recommendation related device according to an embodiment of this application;
FIG. 3 is a diagram of an architecture of a system 100 according to an embodiment of this application;
FIG. 4 is a schematic flowchart of an item recommendation method according to an embodiment of this application;
FIG. 5 is a diagram of a structure of a target model according to an embodiment of this application;
FIG. 6 is a diagram of a structure of a first module and a second module according to an embodiment of this application;
FIG. 7 is a schematic flowchart of a model training method according to an embodiment of this application;
FIG. 8 is a diagram of a structure of an item recommendation apparatus according to an embodiment of this application;
FIG. 9 is a diagram of a structure of a model training apparatus according to an embodiment of this application;
FIG. 10 is a diagram of a structure of an execution device according to an embodiment of this application;
FIG. 11 is a diagram of a structure of a training device according to an embodiment of this application; and
FIG. 12 is a diagram of a structure of a chip according to an embodiment of this application.

## DESCRIPTION OF EMBODIMENTS

Embodiments of this application provide an item recommendation method and a related device thereof. An item recommendation result output by a neural network model used by the method can have high accuracy, thereby helping optimize user experience.

With rapid development of computer technologies, to meet an Internet access requirement of a user, developers are increasingly inclined to display content of interest on a page of an application. In view of this, for an application, it is usually necessary to predict which item or items the user purchases, that is, recommend an item of interest to the user, to present these items on the page of the application, thereby providing a service for the user. For example, for shopping software, it is required to predict commodities that the user is inclined to purchase when using the shopping software, that is, recommend commodities of interest to the user, and display these commodities on a page of the shopping software for the user to browse and purchase.

Currently, a neural network model of an AI technology can be used to predict an item that can be recommended to the user. Specifically, historical information of the user may be first collected, and the historical information indicates items that the user has interacted with and behaviors of the user for these items. Because there are a plurality of types of behaviors (for example, various types of behaviors such as a tap behavior, an add-to-favorites behavior, a search behavior, an add-to-cart behavior, and a purchase behavior) of the user for the item, the historical information of the user may be classified based on the types of behaviors, and various types of historical information is separately processed by using the neural network model, to obtain processing results of the various types of historical information. Finally, the processing results of the various types of historical information may be superimposed to obtain an item recommendation result, thereby determining a target item recommended to the user.

In the foregoing process, when the neural network model processes historical information, mutual impact of a plurality of behaviors belonging to a same category is mainly considered, and factors that are considered are simple. As a result, accuracy of the item recommendation result finally output by the model is not high, affecting user experience.

Further, a plurality of behaviors of the user are usually sorted (for example, in a time sequence), and orders of the behaviors usually affect a purchase decision of the user. For example, a purchase behavior of the user for an item some time ago still have a large impact on a current interest of the user in another item (whether to perform a purchase behavior). The foregoing neural network model cannot be aware of the impact. As a result, an item recommendation result output by the neural network model cannot accurately match a real intention of the user, and accuracy of the item recommendation result is also reduced.

Further, in a training process of the neural network model, a function of training data indicating an auxiliary behavior (for example, a tap behavior, an add-to-favorites behavior, a search behavior, and an add-to-cart behavior) is usually ignored, and only training data indicating a main behavior (for example, a purchase behavior) is used to complete model training, leading to poor performance of a model obtained through training.

To resolve the foregoing problem, an embodiment of this application provides an item recommendation method. The method may be implemented with reference to an artificial intelligence (artificial intelligence, AI) technology. The AI technology is a technical discipline that simulates, extends, and expands human intelligence by using a digital computer or a machine controlled by a digital computer. The AI technology obtains an optimal result by perceiving an environment, obtaining knowledge, and using knowledge. In other words, the artificial intelligence technology is a branch of computer science, and attempts to understand essence of intelligence and produce a new intelligent machine that can react in a similar manner to human intelligence. Using artificial intelligence to process data is a common application manner of artificial intelligence.

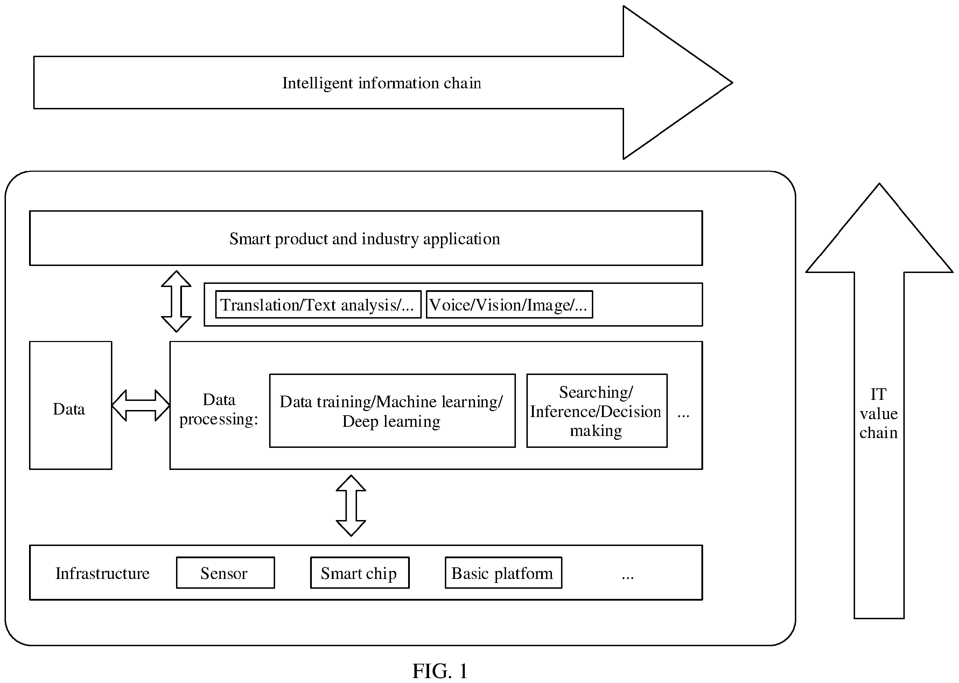

An overall working process of an artificial intelligence system is first described. FIG. 1 is a diagram of a structure of an artificial intelligence main framework. The following describes the artificial intelligence main framework from two dimensions: an "intelligent information chain" (a horizontal axis) and an "IT value chain" (a vertical axis). The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, the data undergoes a refinement process of "data-information-knowledge-intelligence". The "IT value chain" reflects a value brought by artificial intelligence to the information technology industry from an underlying infrastructure and information (technology providing and processing implementation) of artificial intelligence to an industrial ecological process of a system.

(1) Infrastructure

The infrastructure provides computing capability support for the artificial intelligence system, implements communication with an external world, and implements support by using a basic platform. The infrastructure communicates with the outside by using a sensor. A computing capability is provided by a smart chip (a hardware acceleration chip such as a CPU, an NPU, a GPU, an ASIC, or an FPGA). The basic platform includes related platforms such as a distributed computing framework and a network for assurance and support, including cloud storage and computing, an interconnection network, and the like. For example, the sensor communicates with the outside to obtain data, and the data is provided to a smart chip in a distributed computing system provided by the basic platform for computing.

(2) Data

Data at an upper layer of the infrastructure indicates a data source in the artificial intelligence field. The data relates to a graph, an image, a speech, and text, further relates to Internet of Things data of a conventional device, and includes service data of an existing system and perception data such as force, displacement, a liquid level, a temperature, and humidity.

(3) Data processing

Data processing usually includes data training, machine learning, deep learning, searching, inference, decision making, and the like.

Machine learning and deep learning may mean performing symbolic and formalized intelligent information modeling, extraction, preprocessing, training, and the like on data.

Inference is a process in which human intelligent inference is simulated in a computer or an intelligent system, and machine thinking and problem resolving are performed by using formal information based on an inference control policy. A typical function is searching and matching.

Decision making is a process of making a decision after intelligent information is inferred, and usually provides functions such as classification, ranking, and prediction.

(4) General capability

After data processing mentioned above is performed on data, some general capabilities may further be formed based on a data processing result, for example, an algorithm or a general system such as translation, text analysis, computer vision processing, speech recognition, and image recognition.

(5) Intelligent product and industry application

The intelligent product and industry application are products and applications of the artificial intelligence system in various fields. The intelligent product and industry application involve packaging overall artificial intelligence solutions, to productize and apply intelligent information decision-making. Application fields of the intelligent information decision-making mainly include a smart terminal, smart transportation, smart health care, autonomous driving, a smart city, and the like.

The following describes several application scenarios of this application.

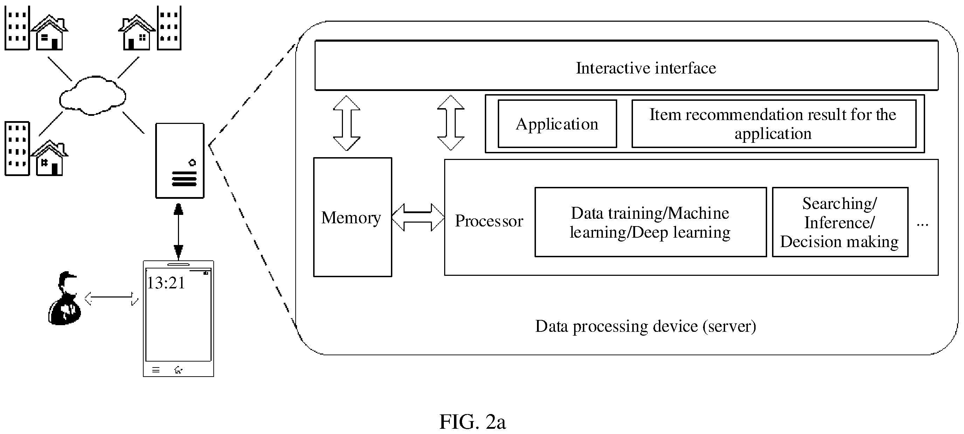

FIG. 2a is a diagram of a structure of an item recommendation system according to an embodiment of this application. The item recommendation system includes user equipment and a data processing device. The user equipment includes a smart terminal such as a mobile phone, a personal computer, or an information processing center. The user equipment is an initiating end of item recommendation. As an initiator of an item recommendation request, a user usually initiates the request by using the user equipment.

The data processing device may be a device or a server that has a data processing function, for example, a cloud server, a network server, an application server, or a management server. The data processing device receives the item recommendation request from the smart terminal through an interactive interface, and then performs item recommendation processing in a manner such as machine learning, deep learning, searching, inference, and decision making by using a memory storing data and a processor processing data. The memory in the data processing device may be a general name, and includes a local storage and a database storing historical data. The database may be in the data processing device, or may be in another network server.

In the item recommendation system shown in FIG. 2a, the user equipment may receive an instruction of the user. For example, the user may trigger/select an application on the user equipment, and then initiate a request to the data processing device, so that the data processing device performs item recommendation processing on the application on the user equipment, to obtain an item recommendation result for the application. For example, the user may trigger one (for example, shopping software, music software, or a software mall) of a plurality of applications installed on the user equipment, and then initiate an item recommendation request for the application to the data processing device, so that the data processing device performs item recommendation processing for the application, to obtain an item recommendation result for the application, that is, a probability that each item in the application is purchased by the user. Therefore, based on the item recommendation result, it may be determined that some items with a high probability are target items recommended to the user.

In FIG. 2a, the data processing device may perform the item recommendation method in embodiments of this application.

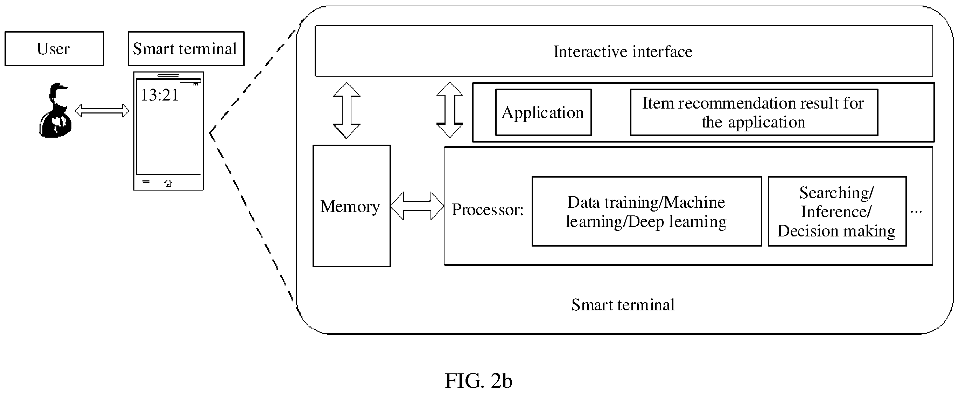

FIG. 2b is a diagram of another structure of an item recommendation system according to an embodiment of this application. In FIG. 2b, the user equipment is directly used as the data processing device. After determining an application triggered/selected by the user, the user equipment can directly perform item recommendation processing on the application. A specific process is similar to that in FIG. 2a. For details, refer to the foregoing descriptions. Details are not described herein again.

In the item recommendation system shown in FIG. 2b, the user equipment may receive an instruction of the user. For example, the user may trigger one of a plurality of applications installed on the user equipment. The user equipment may directly perform item recommendation processing on the application, to obtain an item recommendation result for the application, that is, a probability that each item in the application is purchased by the user. Therefore, based on the item recommendation result, it may be determined that some items with a high probability are target items recommended to the user.

In FIG. 2b, the user equipment may perform the item recommendation method in embodiments of this application.

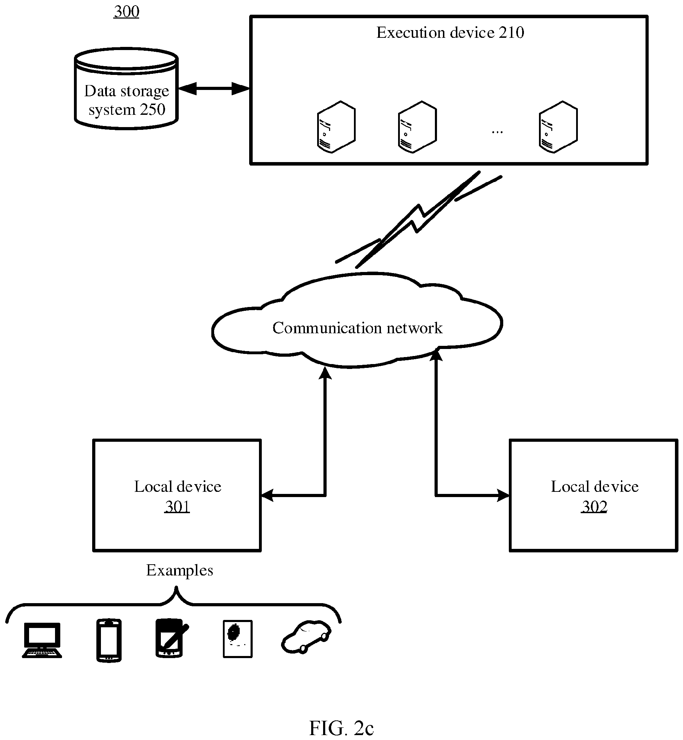

FIG. 2c is a diagram of an item recommendation related device according to an embodiment of this application.

The user equipment in FIG. 2a and FIG. 2b may be specifically a local device 301 or a local device 302 in FIG. 2c. The data processing device in FIG. 2a may be specifically an execution device 210 in FIG. 2c. A data storage system 250 may store to-be-processed data of the execution device 210. The data storage system 250 may be integrated into the execution device 210, or may be disposed on a cloud or another network server.

The processor in FIG. 2a and FIG. 2b may perform data training/machine learning/deep learning by using a neural network model or another model (for example, a model based on a support vector machine), and perform item recommendation processing on an application by using a final model that is obtained through data training or learning, to obtain a corresponding processing result.

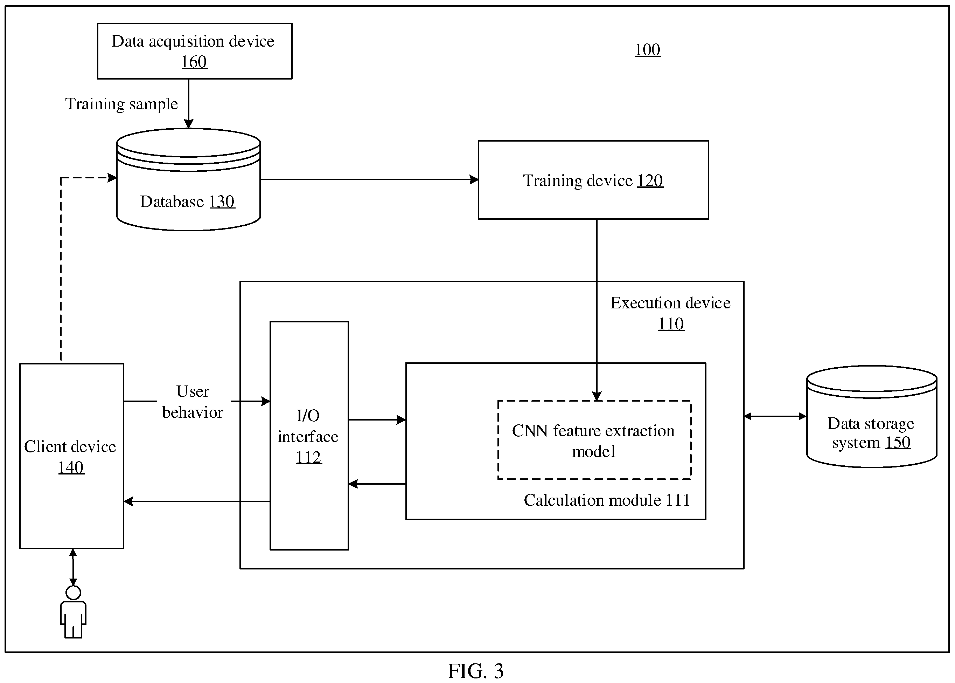

FIG. 3 is a diagram of an architecture of a system 100 according to an embodiment of this application. In FIG. 3, an execution device 110 is configured with an input/output (input/output, I/O) interface 112, to exchange data with an external device. The user may input data to the I/O interface 112 by using a client device 140. In this embodiment of this application, the input data may include: each to-be-scheduled task, a resource that can be invoked, and another parameter.

In a process in which the execution device 110 preprocesses the input data, or in a process in which a calculation module 111 of the execution device 110 performs related processing such as calculation (for example, performs function implementation of a neural network in this application), the execution device 110 may invoke data, code, and the like in a data storage system 150 for corresponding processing, and may further store, into the data storage system 150, data, an instruction, and the like that are obtained through corresponding processing.

Finally, the I/O interface 112 returns a processing result to the client device 140, to provide the processing result for the user.

It should be noted that, for different objectives or different tasks, a training device 120 may generate corresponding target model/rules based on different training data. The corresponding target model/rules may be used to achieve the foregoing objectives or complete the foregoing tasks, thereby providing a required result for the user. The training data may be stored in a database 130, and is a training sample acquired by a data acquisition device 160.

In a case shown in FIG. 3, the user may manually provide input data and the user may manually provide the input data in an interface provided by the I/O interface 112. In another case, the client device 140 may automatically send the input data to the I/O interface 112. If the client device 140 needs to obtain authorization from the user to automatically send the input data, the user may set corresponding permission in the client device 140. The user may view, on the client device 140, a result output by the execution device 110. The result may be specifically presented in a specific manner of displaying, a sound, an action, or the like. The client device 140 may alternatively be used as a data acquisition end, to acquire, as new sample data, input data input to the I/O interface 112 and an output result output from the I/O interface 112 that are shown in the figure, and store the new sample data in the database 130. Certainly, the client device 140 may alternatively not perform acquisition. Instead, the I/O interface 112 directly stores, in the database 130 as new sample data, the input data input to the I/O interface 112 and the output result output from the I/O interface 112 that are shown in the figure.

It should be noted that FIG. 3 is merely a diagram of a system architecture according to an embodiment of this application. A position relationship between the devices, the components, the modules, and the like shown in the figure does not constitute any limitation. For example, in FIG. 3, the data storage system 150 is an external memory relative to the execution device 110. In another case, the data storage system 150 may alternatively be disposed in the execution device 110. As shown in FIG. 3, a neural network may be obtained through training based on the training device 120.

An embodiment of this application further provides a chip. The chip includes a neural-network processing unit NPU. The chip may be disposed in the execution device 110 shown in FIG. 3, to complete calculation work of the calculation module 111. The chip may alternatively be disposed in the training device 120 shown in FIG. 3, to complete training work of the training device 120 and output the target model/rule.

The neural-network processing unit NPU serves as a coprocessor, and may be disposed on a host central processing unit (central processing unit, CPU) (host CPU). The host CPU assigns a task. A core part of the NPU is an operation circuit, and a controller controls the operation circuit to extract data in a memory (a weight memory or an input memory) and perform an operation.

In some implementations, the operation circuit includes a plurality of processing engines (process engine, PE) inside. In some implementations, the operation circuit is a two-dimensional systolic array. The operation circuit may alternatively be a one-dimensional systolic array or another electronic circuit capable of performing mathematical operations such as multiplication and addition. In some implementations, the operation circuit is a general-purpose matrix processor.

For example, it is assumed that there is an input matrix A, a weight matrix B, and an output matrix C. The operation circuit fetches, from a weight memory, data corresponding to the matrix B, and caches the data on each PE in the operation circuit. The operation circuit fetches data of the matrix A from an input memory, to perform a matrix operation on the matrix B, and stores an obtained partial result or an obtained final result of the matrix in an accumulator (accumulator).

A vector calculation unit may perform further processing on an output of the operation circuit, for example, vector multiplication, vector addition, an exponent operation, a logarithm operation, or a value comparison. For example, the vector calculation unit may be configured to perform network computation, such as pooling (pooling), batch normalization (batch normalization), or local response normalization (local response normalization) at a non-convolutional/non-FC layer in the neural network.

In some implementations, the vector calculation unit can store a processed output vector in a unified buffer. For example, the vector calculation unit may apply a non-linear function to the output of the operation circuit, for example, a vector of an accumulated value, to generate an activation value. In some implementations, the vector calculation unit generates a normalized value, a combined value, or both a normalized value and a combined value. In some implementations, the processed output vector can be used as an activation input to the operation circuit, for example, used at a subsequent layer in the neural network.

A unified memory is configured to store input data and output data.

For weight data, a storage unit access controller (direct memory access controller, DMAC) directly transfers input data in the external memory to the input memory and/or the unified memory, stores, into the weight memory, weight data in the external memory, and stores, into the external memory, the data in the unified memory.

A bus interface unit (bus interface unit, BIU) is configured to implement interaction between the host CPU, the DMAC, and an instruction fetch buffer by using a bus.

The instruction fetch buffer (instruction fetch buffer) connected to the controller is configured to store instructions used by the controller.

The controller is configured to invoke the instructions buffered in the instruction fetch buffer, to control a working process of an operation accelerator.

Usually, the unified memory, the input memory, the weight memory, and the instruction fetch buffer each are an on-chip (On-Chip) memory. The external memory is a memory outside the NPU. The external memory may be a double data rate synchronous dynamic random access memory (double data rate synchronous dynamic random access memory, DDR SDRAM), a high bandwidth memory (high bandwidth memory, HBM), or another readable and writable memory.

Embodiments of this application relate to massive application of a neural network. Therefore, for ease of understanding, the following first describes terms and concepts related to the neural network in embodiments of this application.

(1) Neural network

The neural network may include a neuron. The neuron may be an operation unit that uses xs and an intercept of 1 as an input. An output of the operation unit may be as follows:

$$h_{W,b}\left(x\right) = f\left(W^{T}x\right) = f(\sum\nolimits_{s=1}^{n} W_{s}x_{s} + b) \tag{1}$$

s = 1, 2, ..., or n. n is a natural number greater than 1. Ws is a weight of xs. b is a bias of the neuron. f is an activation function (activation function) of the neuron, and is used to introduce a non-linear feature into the neural network to, convert an input signal in the neuron into an output signal. The output signal of the activation function may serve as an input of a next convolutional layer. The activation function may be a sigmoid function. The neural network is a network formed by connecting many single neurons together. To be specific, an output of a neuron may be an input of another neuron. An input of each neuron may be connected to a local receptive field of a previous layer to extract a feature of the local receptive field. The local receptive field may be a region including several neurons.

Work at each layer of the neural network may be described by using a mathematical expression $y = a(Wx+b)$. From a physical layer, work at each layer of the neural network may be understood as completing transformation from input space to output space (namely, from row space to column space of a matrix) by performing five operations on the input space (a set of input vectors). The five operations include: 1. dimension increasing/dimension reduction; 2. scaling up/scaling down; 3. rotation; 4. translation; and 5. "bending". The operations 1, 2, and 3 are performed by $Wx$, the operation 4 is performed by $+b$, and the operation 5 is performed by $a()$. The word "space" is used herein for expression because a classified object is not a single thing, but a type of things. Space is a collection of all individuals of this type of things. $W$ is a weight vector, and each value in the vector represents a weight value of one neuron at this layer of the neural network. The vector $W$ determines space transformation from the input space to the output space described above. In other words, a weight $W$ at each layer controls how to transform space. A purpose of training the neural network is to finally obtain a weight matrix (a weight matrix formed by vectors $W$ at a plurality of layers) at all layers of a trained neural network. Therefore, a training process of the neural network is essentially a manner of learning of control of space transformation, and more specifically, learning of a weight matrix.

Because it is expected that an output of the neural network is as close as possible to a value that is actually expected to be predicted, a current predicted value of the network may be compared with an actually expected target value, and then a weight vector at each layer of the neural network is updated based on a difference between the current predicted value and the target value (certainly, there is usually an initialization process before a first update, that is, a parameter is preconfigured for each layer of the neural network). For example, if the predicted value of the network is large, the weight vector is adjusted to decrease the predicted value, and adjustment is continuously performed, until the neural network can predict the actually expected target value. Therefore, "how to obtain a difference between the predicted value and the target value through comparison" needs to be predefined. This is a loss function (loss function) or an objective function (objective function). The loss function and the objective function are important equations that measure the difference between the predicted value and the target value. The loss function is used as an example. A higher output value (loss) of the loss function indicates a larger difference. Therefore, training of the neural network is a process of minimizing the loss as much as possible.

(2) Back propagation algorithm

In a training process, a neural network may correct a value of a parameter in an initial neural network model by using an error back propagation (back propagation, BP) algorithm, so that a reconstruction error loss of the neural network model becomes increasingly smaller. Specifically, an input signal is forward transferred until the error loss is generated in an output, and the parameter of the initial neural network model is updated through back propagation of information about the error loss, to converge the error loss. The back propagation algorithm is an error-loss-centered back propagation motion intended to obtain a parameter, such as a weight matrix, of an optimal neural network model.

The following describes the method provided in this application from a neural network training side and a neural network application side.

The model training method provided in this embodiment of this application relates to data sequence processing, and may be specifically applied to methods such as data training, machine learning, and deep learning, to perform symbolic and formalized intelligent information modeling, extraction, preprocessing, training, and the like on training data (for example, N pieces of first information and N pieces of third information in the model training method provided in this embodiment of this application), and finally obtain a trained neural network (for example, a target model in the model training method provided in this embodiment of this application). In addition, in the item recommendation method provided in this embodiment of this application, input data (for example, the N pieces of first information and the N pieces of third information in the item recommendation method provided in this embodiment of this application) may be input into the trained neural network by using the foregoing trained neural network, to obtain output data (for example, the item recommendation result in the item recommendation method provided in this embodiment of this application). It should be noted that, the model training method and the item recommendation method provided in embodiments of this application are inventions generated based on a same idea, or may be understood as two parts in a system, or two phases of an entire procedure, for example, a model training phase and a model application phase.

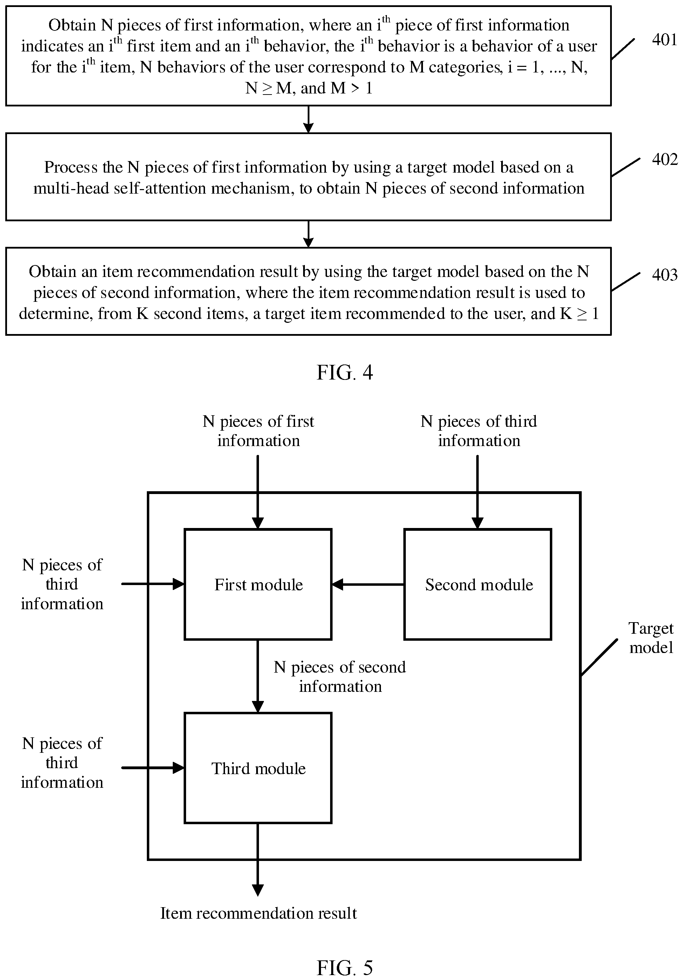

FIG. 4 is a schematic flowchart of an item recommendation method according to an embodiment of this application. As shown in FIG. 4, the method includes the following steps.

401: Obtain N pieces of first information, where an $i^{th}$ piece of first information indicates an $i^{th}$ first item and an $i^{th}$ behavior, the $i^{th}$ behavior is a behavior of a user for the $i^{th}$ item, N behaviors of the user correspond to M categories, i = 1, ..., N, N $\geq$ M, and M > 1.

In this embodiment, when a user uses an application, to display an item of interest on a page of the application, some historical data of previously using the application by the user may be first acquired. The historical data may include attribute information (for example, a name of a first item, a price of the first item, a function of the first item, and a category of the first item) of N first items (which may also be referred to as historical items) that the user has operated on the application, and related information (for example, a type of a behavior) of the N behaviors performed by the user when the user operates the N first items. It should be noted that, based on the related information of the N behaviors, the N behaviors may be classified into M categories, and one category may include at least one behavior. For example, for shopping software, it is assumed that the user once taps three commodities, adds two commodities to favorites, and purchases two commodities on the software. It can be learned that the user has operated seven commodities, and therefore, the user correspondingly performs seven behaviors. The seven behaviors may be classified into three types. A first type includes three tap behaviors, a second type includes two add-to-favorites behaviors, and a third type includes two purchase behaviors. In this case, when historical data of the user for the software is acquired, the historical data includes attribute information of the seven commodities and related information of the seven behaviors.

In this case, the attribute information of the N first items may be separately mapped to latent space, to correspondingly obtain vector representations of the N first items, where a vector representation of the $i^{th}$ first item indicates the $i^{th}$ first item. Similarly, the related information of the N behaviors may be separately mapped to the latent space, to correspondingly obtain vector representations (that is, N pieces of third information) of the N behaviors, where a vector representation of the $i^{th}$ behavior (that is, an $i^{th}$ piece of third information) indicates a behavior of the user for the $i^{th}$ first item. For example, after the attribute information of the N first items is mapped, vector representations $x = [x_1, x_2, ..., x_N]$ of the N first items may be obtained. A vector representation $x_1$ of a $1^{st}$ first item indicates the $1^{st}$ first item, a vector

representation $x_2$ of a 2nd first item indicates the 2nd first item, ..., and a vector representation $x_N$ of an Nth first item indicates the Nth first item. Similarly, after the related information of the N behaviors is mapped, vector representations $b = [b_1, b_2,..., b_N]$ of the N behaviors may be obtained. A vector representation $b_1$ of a 1st behavior (that is, a 1st piece of third information) indicates a behavior of the user for the 1st first item, a vector representation $b_2$ of a 2nd behavior (that is, a 2nd piece of third information) indicates a behavior of the user for the 2nd first item, ..., and a vector representation $b_N$ of an Nth behavior (that is, an Nth piece of third information) indicates a behavior of the user for the Nth first item.

Based on this, the vector representation of the $i$th first item and the vector representation of the $i$th behavior may be spliced to obtain the $i$th piece of first information. The $i$th piece of first information indicates the $i$th first item and a behavior of the user for the $i$th first item. Similar splicing operations may also be performed on vector representations of remaining first items and vector representations of remaining behaviors, so that the N pieces of first information can be obtained. Still as in the foregoing example, the vector representation $x_1$ of the 1st first item and the vector representation $b_1$ of the 1st behavior may be spliced to obtain a 1st piece of first information $h_1$, the vector representation of the 2nd first item and the vector representation of the 2nd behavior may be spliced to obtain a 2nd piece of first information $h_2$, ..., and the vector representation of the Nth first item and the vector representation of the Nth behavior are spliced to obtain an Nth piece of first information $h_N$. In this way, the N pieces of first information $H = [h_1, h_2,..., h_N]$ are obtained.

After the N pieces of first information are obtained, the N pieces of first information may be input into a target model (a trained neural network model), to process the N pieces of first information by using the target model and obtain an item recommendation result.

402: Process the N pieces of first information by using the target model based on a multi-head self-attention mechanism, to obtain N pieces of second information.

The target model obtains the N pieces of first information, and the N pieces of first information may be processed based on the multi-head self-attention mechanism to obtain the N pieces of second information.

It should be noted that, as shown in FIG. 5 (FIG. 5 is a diagram of a structure of a target model according to an embodiment of this application), the target model may include a first module, a second module, and a third module. A first input end of the first module is used as a first input end of the entire target model, and is configured to receive the N pieces of first information. A second input end of the first module is used as a second input end of the target model, and is configured to receive the N pieces of third information. An input end of the second module is used as a third input end of the target model, and is configured to receive the N pieces of third information. A first input end of the third module is used as a fourth input end of the target model, and is configured to receive the N pieces of third information. A third input end of the first module is connected to an output end of the second module, an output end of the first module is connected to a second input end of the third module, and an output end of the third module is used as an output end of the target model.

Specifically, the first module of the target model may process the N pieces of first information based on the multi-head self-attention mechanism in the following manners, to obtain the N pieces of second information.

(1) After the N pieces of first information are received, for any one of the N pieces of first information, that is, the $i$th piece of first information, the first module may first perform linear processing on the $i$th piece of first information, to obtain an $i$th piece of Q information, an $i$th piece of K information, and an $i$th piece of V information. For the remaining first information other than the $i$th piece of first information, the first module may further perform an operation similar to that performed on the $i$th piece of first information. Therefore, a total of N pieces of Q information, N pieces of K information, and N pieces of V information can be obtained. To be specific, the first module may perform linear processing on the 1st piece of first information, to obtain a 1st piece of Q information, a 1st piece of K information, and a 1st piece of V information, may further perform linear processing on the 2nd piece of first information, to obtain a 2nd piece of Q information, a 2nd piece of K information, a 2nd piece of V information, ..., and may further perform linear processing on the Nth piece of first information, to obtain an Nth piece of Q information, an Nth piece of K information, and an Nth piece of V information.

(2) For the $i$th piece of Q information, the first module may perform an operation on the $i$th piece of Q information, the N pieces of K information, the N pieces of V information, and N pieces of weight information corresponding to the $i$th behavior, to obtain an $i$th piece of second information. A $j$th piece of weight information corresponding to the $i$th behavior is determined based on the $i$th behavior and a $j$th behavior, and $j = 1, ..., N$. For the remaining Q information other than the $i$th piece of Q information, the first module may further perform an operation similar to that performed on the $i$th piece of Q information. Therefore, the N pieces of second information can be obtained. To be specific, the first module may first perform an operation on the 1st piece of Q information, the N pieces of K information, the N pieces of V information, and N pieces of weight information corresponding to a 1st behavior, to obtain a 1st piece of second information, the first module may further perform an operation on the 2nd piece of Q information, the N pieces of K information, the N pieces of V information, and N pieces of weight information corresponding to a 2nd behavior, to obtain a 2nd piece of second information, ..., and the first module may further perform an operation on the Nth piece of Q information, the N pieces of K information, the N pieces of V information, and N pieces of weight information corresponding to an Nth behavior, to obtain an Nth piece of second information. A 1st piece of weight information corresponding to the 1st behavior is

determined based on the 1st behavior, a 2nd piece of weight information corresponding to the 1st behavior is determined based on the 1st behavior and the 2nd behavior, ..., an Nth piece of weight information of the 1st behavior is determined based on the 1st behavior and the Nth behavior, ..., a 1st piece of weight information corresponding to the Nth behavior is determined based on the Nth behavior and the 1st behavior, a 2nd piece of weight information corresponding to the Nth behavior is determined based on the Nth behavior and the 2nd behavior, ..., and an Nth piece of weight information of the Nth behavior is determined based on the Nth behavior.

Further, the second module of the target model may further cooperate with the first module of the target model to jointly obtain the N pieces of second information.

(1) After the N pieces of third information are received, for any one of the N pieces of third information, that is, the ith piece of third information, the second module may perform an operation on the ith piece of third information and the N pieces of third information, to obtain N pieces of fourth information corresponding to the ith behavior. A jth piece of fourth information corresponding to the ith behavior indicates a distance between the ith behavior and the jth behavior. For the remaining third information other than the ith piece of third information, the second module may also perform an operation similar to that performed on the ith piece of third information. Therefore, a total of N pieces of fourth information corresponding to the 1st behavior, N pieces of fourth information corresponding to the 2nd behavior, ..., and N pieces of fourth information corresponding to the Nth behavior can be obtained. To be specific, the second module may perform an operation on the 1st piece of third information and the 1st piece of third information to obtain a 1st piece of fourth information (indicating a distance between 1st behaviors) corresponding to the 1st behavior, may further perform an operation on the 1st piece of third information and the 2nd piece of third information to obtain a 2nd piece of fourth information (indicating a distance between the 1st behavior and the 2nd behavior) corresponding to the 1st behavior, ..., may further perform an operation on the 1st piece of third information and an Nth piece of third information to obtain an Nth piece of fourth information (indicating a distance between the 1st behavior and the Nth behavior) corresponding to the 1st behavior, ..., may further perform an operation on the Nth piece of third information and the 1st piece of third information to obtain a 1st piece of fourth information (indicating a distance between the Nth behavior and the 1st behavior) corresponding to the Nth behavior, may further perform an operation on the Nth piece of third information and the 2nd piece of third information to obtain a 2nd piece of fourth information (indicating a distance between the Nth behavior and the 2nd behavior) corresponding to the Nth behavior, ..., and may further perform an operation on the Nth piece of third information and the Nth piece of third information to obtain an Nth piece of fourth information (indicating a distance between Nth behaviors) corresponding to the Nth behavior.
(2) After the N pieces of fourth information corresponding to the 1st behavior, the N pieces of fourth information corresponding to the 2nd behavior, ..., and the N pieces of fourth information corresponding to the Nth behavior from the second module are received, for the ith piece of Q information, the first module may perform an operation on the ith piece of Q information, the N pieces of K information, the N pieces of V information, the N pieces of weight information corresponding to the ith behavior, and the N pieces of fourth information corresponding to the ith behavior, to obtain the ith piece of second information. For the remaining Q information other than the ith piece of Q information, the first module may further perform an operation similar to that performed on the ith piece of Q information. Therefore, the N pieces of second information can be obtained. To be specific, the first module may first perform an operation on the 1st piece of Q information, the N pieces of K information, the N pieces of V information, the N pieces of weight information corresponding to the 1st behavior, and the N pieces of fourth information corresponding to the 1st behavior to obtain the 1st piece of second information, the first module may further perform an operation on the 2nd piece of Q information, the N pieces of K information, the N pieces of V information, the N pieces of weight information corresponding to the 2nd behavior, and the N pieces of fourth information corresponding to the 2nd behavior to obtain the 2nd piece of second information, ..., and the first module may further perform an operation on the Nth piece of Q information, the N pieces of K information, the N pieces of V information, the N pieces of weight information corresponding to the Nth behavior, and the N pieces of fourth information corresponding to the Nth behavior to obtain the Nth piece of second information.

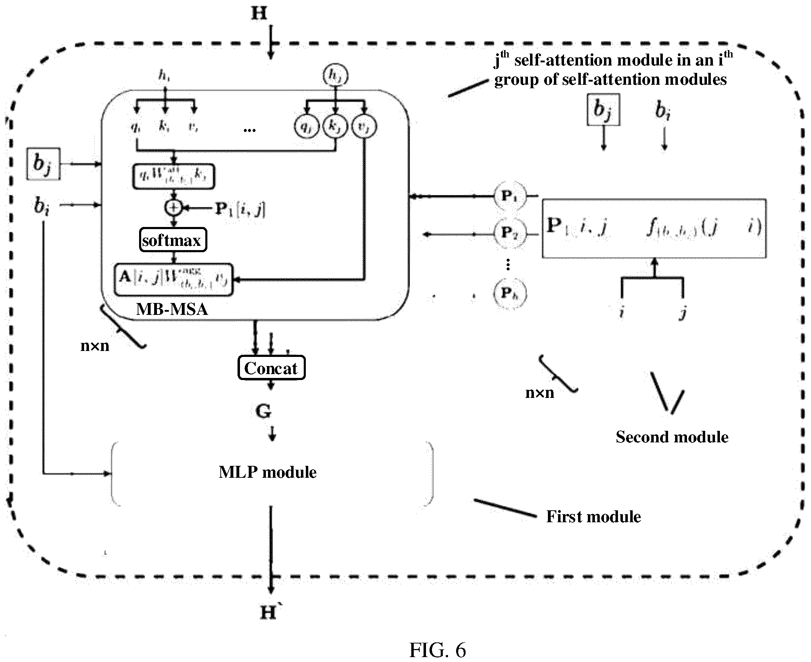

Further, the distance between the ith behavior and the jth behavior includes an interval between an order of the ith behavior and an order of the jth behavior, for example, an interval between a time at which the user performs the ith behavior and a time at which the user performs the jth behavior.
Still as in the foregoing example, as shown in FIG. 6 (FIG. 6 is a diagram of a structure of a first module and a second module according to an embodiment of this application, and FIG. 6 is drawn based on FIG. 5), the first module of the target model may include N groups of self-attention modules and a multilayer perceptron (multilayer perceptron, MLP) module, the N groups of self-attention modules are all connected to the MLP module, and each group of self-attention modules may include N self-attention modules. In addition, in the N groups of self-attention modules, a 1st group of self-attention modules are configured to process the 1st piece of first information $h_1$ to obtain a 1st piece of twelfth information $g_1$, a 2nd group of self-attention modules are configured to process the 2nd piece of first information $h_2$ to obtain a 2nd piece

of twelfth information $g_2$, ..., and an $N^{th}$ group of self-attention modules are configured to process the $N^{th}$ piece of first information $h_N$ to obtain an $N^{th}$ piece of twelfth information $g_N$. The MLP module may separately process the $1^{st}$ piece of twelfth information $g_1$, the $2^{nd}$ piece of twelfth information $g_2$, ..., and the $N^{th}$ piece of twelfth information $g_N$, to correspondingly obtain the $1^{st}$ piece of second information $h_1$, the $2^{nd}$ piece of second information $h_2$, and the $N^{th}$ piece of second information $h_N$.

The following describes working processes of the N groups of self-attention modules and the MLP module. Because the working processes of the N groups of self-attention modules are similar, for ease of description, the following describes any one of the N groups of self-attention modules, that is, an $i^{th}$ group of self-attention modules.

For a $j^{th}$ self-attention module in the $i^{th}$ group of self-attention modules, the $i^{th}$ piece of first information $h_i$ and a $j^{th}$ piece of information $h_j$ are input. The self-attention module may first perform linear processing on the $i^{th}$ piece of first information $h_i$ to obtain the $i^{th}$ piece of Q information $q_i$, the $i^{th}$ piece of K information $k_i$, and the $i^{th}$ piece of V information $v_i$, and perform linear processing on the $j^{th}$ piece of information $h_j$ to obtain a $j^{th}$ piece of Q information $q_j$, a $j^{th}$ piece of K information $k_j$, and a $j^{th}$ piece of V information $v_j$.

Then, the module may multiply the $i^{th}$ piece of Q information $q_i$, the $j^{th}$ piece of K information $k_j$, and a $j^{th}$ first weight matrix $W^{att}_{(b_i,b_j)}$ corresponding to the $i^{th}$ behavior, to obtain a $j^{th}$ piece of ninth information $F[i, j]$ corresponding to the $i^{th}$ behavior. The information is expressed as the following formula:

$$F[i, j] = q_i W^{att}_{(b_i,b_j)} k_j \qquad (2)$$

At the same time, the module may further receive the $j^{th}$ piece of fourth information $P1[i, j]$ corresponding to the $i^{th}$ behavior from the second module. The $j^{th}$ piece of fourth information $P1[i, j]$ corresponding to the $i^{th}$ behavior may be obtained by the second module by performing an operation on the $i^{th}$ piece of third information $b_i$ and a $j^{th}$ piece of third information $b_j$. An operation process is expressed as the following formula:

$$P_1[i, j] = f_{(b_i,b_j)}(j - i) \qquad (3)$$

In the foregoing formula, $(j\text{-}i)$ may be determined based on the $i^{th}$ piece of third information $b_i$ and the $j^{th}$ piece of third information $b_j$, and indicates an interval between an order of the $i^{th}$ behavior and an order of the $j^{th}$ behavior.

Then, the module may perform fusion (for example, addition) on the $j^{th}$ piece of ninth information $F[i, j]$ corresponding to the $i^{th}$ behavior and the $j^{th}$ piece of fourth information $P_1[i, j]$ corresponding to the $i^{th}$ behavior, and then perform normalization (for example, softmax processing), to obtain a $j^{th}$ piece of tenth information $A[i,j]$ corresponding to the $i^{th}$ behavior.

Subsequently, the module may multiply the $j^{th}$ piece of tenth information $A[i,j]$ corresponding to the $i^{th}$ behavior, a $j^{th}$ second weight matrix $W^{agg}_{(b_i,b_j)}$ corresponding to the $i^{th}$ behavior, and the $j^{th}$ piece of V information $v_j$, to obtain a $j^{th}$ piece of eleventh information $R[i, j]$ corresponding to the $i^{th}$ behavior. The information is expressed as the following formula:

$$R[i, j] = A[i, j]W^{agg}_{(b_i,b_j)}v_j \qquad (4)$$

It should be noted that the $j^{th}$ first weight matrix $W^{att}_{(b_i,b_j)}$ corresponding to the $i^{th}$ behavior and the $j^{th}$ second weight matrix $W^{agg}_{(b_i,b_j)}$ corresponding to the $i^{th}$ behavior are the $j^{th}$ piece of weight information corresponding to the $i^{th}$ behavior.

Similarly, the remaining self-attention modules other than the $j^{th}$ self-attention module in the $i^{th}$ group of self-attention modules may also perform an operation similar to that performed by the $j^{th}$ self-attention module. Therefore, the $i^{th}$ group of self-attention modules may obtain N pieces of eleventh information $R[i]=[R[i,1],R[i,2],...,R[i,N]]$ corresponding to the $i^{th}$ behavior, and perform weighted summation on $R[i,1],R[i,2],...,R[i,N]$, to obtain an $i^{th}$ piece of twelfth information $g_i$.

Similarly, the remaining groups of self-attention modules other than the $i^{th}$ group of self-attention modules may also perform an operation similar to that performed by the $i^{th}$ group of self-attention modules. Therefore, the N groups of self-attention modules may obtain N pieces of twelfth information $G = [g_1, g_2, ..., g_N]$ in total, that is, the $1^{st}$ piece of twelfth information $g_1$, the $2^{nd}$ piece of twelfth information $g_2$, ..., and the $N^{th}$ piece of twelfth information $g_N$.

Finally, after the N pieces of twelfth information $G=[g_1, g_2, ..., g_N]$ are received, the MLP module may process the N pieces of twelfth information $G=[g_1, g_2, ..., g_N]$ with reference to the N pieces of third information $b=[b_1, b_2, ..., b_n]$, to obtain N

pieces of second information $H^{\grave{}} = [h_1^{\grave{}}, h_2^{\grave{}}, ..., h_N^{\grave{}}]$. To be specific, the 1st piece of third information $b_1$ and the 1st piece of twelfth information $g_1$ are processed (for example, feature extraction and non-linear processing) to obtain the 1st piece of second information $h_1^{\grave{}}$, the 2nd piece of third information $b_2$ and the 2nd piece of twelfth information $g_2$ are processed to obtain the 2nd piece of second information $h_2^{\grave{}}$, ..., and the Nth piece of third information $b_N$ and the Nth piece of twelfth information $g_N$ are processed (for example, feature extraction and non-linear processing) to obtain the Nth piece of second information $h_N^{\grave{}}$.

403: Obtain an item recommendation result by using the target model based on the N pieces of second information, where the item recommendation result is used to determine, from K second items, a target item recommended to the user, and $K \geq 1$.

After the N pieces of second information are obtained, the target model may obtain the item recommendation result based on the N pieces of second information. The item recommendation result may be used to determine, from the K second items (which may also be understood as candidate items), the target item recommended to the user, and $K \geq 1$. Usually, the K second items include the N first items.

Specifically, the third module of the target model may obtain the item recommendation result in the following manners.

(1) After the N pieces of second information from the first module are received, a first expert network of the third module may perform feature extraction on the N pieces of second information to obtain fifth information. The fifth information includes an exclusive characteristic of each of the N behaviors. Therefore, the fifth information may be used by the fifth information to indicate a difference between the N behaviors. At the same time, a second expert network of the third module may perform feature extraction on the N pieces of second information to obtain sixth information. The sixth information includes a common characteristic of the N behaviors. Therefore, the sixth information may indicate a same point between the N behaviors.

(2) After the fifth information and the sixth information are obtained, the third module may perform weighted summation on the fifth information and the sixth information (a used weight may be determined by the third module based on the N pieces of third information), to obtain seventh information. The seventh information is a behavior representation of the user. Therefore, the seventh information may indicate interest distribution of the user.

(3) After the seventh information is obtained, the third module may further obtain K pieces of eighth information. A $t^{th}$ piece of eighth information indicates a $t^{th}$ second item, and $t = 1, ..., K$. In the K pieces of eighth information, the third module may calculate a matching degree between the seventh information and the $t^{th}$ piece of eighth information. For eighth information other than the $t^{th}$ piece of eighth information, the third module may also perform an operation similar to that performed on the $t^{th}$ piece of eighth information. Therefore, matching degrees between the seventh information and the K pieces of eighth information can be obtained. Therefore, these matching degrees can be used as final item recommendation results output by the target model.

In this way, based on the item recommendation result, it may be determined that some second items with a high matching degree are target items recommended to the user.

In addition, the target module provided in this embodiment of this application may be further compared with a neural network model provided in a related technology, for comparison of performance of these models on different datasets. Comparison results are shown in Table 1.

**Table 1**

| Model | Dataset 1 | | Dataset 2 | | Dataset 3 | |
|---|---|---|---|---|---|---|
| Indicator | Indicator 1 | Indicator 2 | Indicator 1 | Indicator 2 | Indicator 1 | Indicator 2 |
| Related technology 1 | 0.755 | 0.481 | 0.262 | 0.153 | 0.285 | 0.185 |
| Related technology 2 | 0.756 | 0.485 | 0.305 | 0.189 | 0.392 | 0.250 |
| Related technology 3 | 0.789 | 0.500 | 0.302 | 0.185 | 0.461 | 0.292 |
| Related technology 4 | 0.810 | 0.513 | 0.373 | 0.235 | 0.443 | 0.282 |
| Related technology 5 | 0.796 | 0.504 | 0.372 | 0.221 | 0.597 | 0.406 |
| Related technology 6 | 0.816 | 0.531 | 0.385 | 0.234 | 0.605 | 0.431 |

(continued)

| Model | Dataset 1 | | Dataset 2 | | Dataset 3 | |
|---|---|---|---|---|---|---|
| Indicator | Indicator 1 | Indicator 2 | Indicator 1 | Indicator 2 | Indicator 1 | Indicator 2 |
| Related technology 7 | 0.793 | 0.492 | 0.374 | 0.221 | 0.481 | 0.307 |
| Related technology 8 | 0.872 | 0.585 | 0.391 | 0.243 | 0.486 | 0.317 |
| Related technology 9 | 0.790 | 0.478 | 0.332 | 0.179 | 0.481 | 0.304 |
| Related technology 10 | 0.826 | 0.530 | 0.354 | 0.209 | 0.489 | 0.309 |
| Related technology 11 | 0.796 | 0.502 | 0.369 | 0.222 | 0.463 | 0.277 |
| Related technology 12 | 0.87 | 0.582 | 0.491 | 0.300 | 0.532 | 0.345 |
| Related technology 13 | 0.791 | 0.500 | 0.317 | 0.178 | 0.475 | 0.296 |
| Related technology 14 | 0.819 | 0.531 | 0.637 | 0.442 | 0.795 | 0.611 |
| Related technology 15 | 0.838 | 0.558 | 0.675 | 0.476 | 0.816 | 0.632 |
| Related technology 16 | 0.652 | 0.515 | 0.666 | 0.415 | 0.682 | 0.513 |
| Embodiments of this application | 0.882 | 0.624 | 0.768 | 0.608 | 0.879 | 0.713 |
| Performance improvement | 1.15% | 6.67% | 13.78% | 27.73% | 7.72% | 12.82% |

It can be learned from Table 1 that, in terms of recommendation accuracy, the target model provided in embodiments of this application can obtain an optimal experimental result on both indicators, which proves effectiveness of the item recommendation manner provided in embodiments of this application.

In embodiments of this application, when the target item of interest needs to be recommended to the user, the N pieces of first information may be first input to the target model. The $i^{th}$ piece of first information indicates the $i^{th}$ first item and the $i^{th}$ behavior. The $i^{th}$ behavior is a behavior of the user for the $i^{th}$ item. The N behaviors of the user correspond to M categories. $i = 1, ..., N \geq M$, and $M > 1$. Then, the N pieces of first information may be processed by using the target model based on the multi-head self-attention mechanism, to obtain the N pieces of second information. Finally, the item recommendation result can be obtained by using the target model based on the N pieces of second information. The item recommendation result is used to determine, from the K second items, the target item recommended to the user, and $K \geq 1$. In the foregoing process, the N pieces of first information not only indicate N first items, but also indicate the N behaviors that can be classified into the M categories. Therefore, in a process in which the target model processes the N pieces of first information to correspondingly obtain the N pieces of second information, not only mutual impact of a plurality of behaviors belonging to a same category and mutual impact of a plurality of first items may be considered, but also mutual impact of a plurality of behaviors belonging to different categories may be considered. Factors that are considered are comprehensive. Therefore, the item recommendation result output by the target model based on the N pieces of second information can have high accuracy, thereby helping optimize user experience.

Further, in a process of processing the N pieces of first information based on the multi-head self-attention mechanism, the target model further considers impact caused by an interval (for example, an interval between times at which the user performs different behaviors) between orders of different behaviors. Factors that are considered are more comprehensive in comparison with a related technology. The item recommendation result output by the target model may also accurately fit a real intention of the user, thereby further improving accuracy of the item recommendation result.

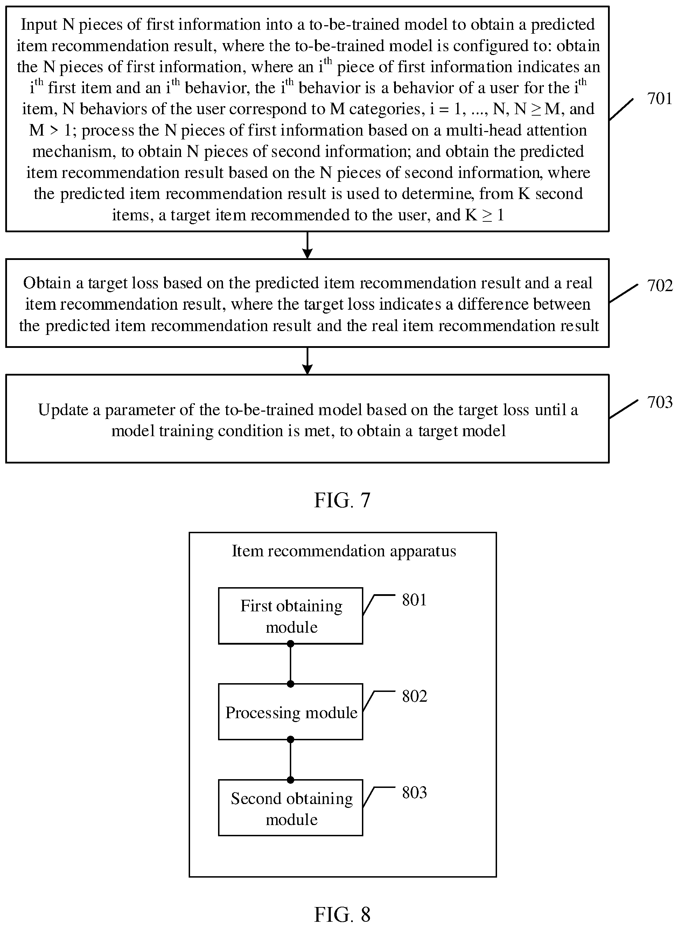

The foregoing describes in detail the item recommendation method provided in embodiments of this application. The following describes a model training method provided in embodiments of this application. FIG. 7 is a schematic flowchart of a model training method according to an embodiment of this application. As shown in FIG. 7, the method includes the following steps.

701: Input N pieces of first information into a to-be-trained model to obtain a predicted item recommendation result, where the to-be-trained model is configured to: obtain the N pieces of first information, where an $i^{th}$ piece of first information indicates an $i^{th}$ first item and an $i^{th}$ behavior, the $i^{th}$ behavior is a behavior of a user for the $i^{th}$ item, N behaviors of the user correspond to M categories, $i = 1, ..., N, N \geq M$, and $M > 1$; process the N pieces of first information based on a multi-head attention mechanism, to obtain N pieces of second information; and obtain the predicted item recommendation result based on the N pieces of second information, where the predicted item recommendation result is used to determine, from K second items, a target item recommended to the user, and $K \geq 1$.

In this embodiment, when the to-be-trained model (that is, a neural network model that needs to be trained) needs to be trained, a batch of training data may be first obtained. The batch of training data includes the N pieces of first information. The $i^{th}$ piece of first information indicates the $i^{th}$ first item (that is, a historical item) and the $i^{th}$ behavior, the $i^{th}$

behavior is the behavior of the user for the $i^{th}$ item, the N behaviors of the user correspond to the M categories, i = 1, ..., N, N ≥ M, and M > 1. It should be noted that real item recommendation results corresponding to the N pieces of first information are known. Therefore, based on the real item recommendation results, a real item recommended to the user may be determined from the K second items (that is, candidate items).

In this case, after the N pieces of first information are obtained, the N pieces of first information may be input into the to-be-trained model. In this way, after the N pieces of first information are received, the to-be-trained model may process the N pieces of first information based on the multi-head attention mechanism, to obtain the N pieces of second information. Then, the to-be-trained model may obtain the predicted item recommendation result based on the N pieces of second information, and the predicted item recommendation result is used to determine, from the K second items, the target item (a predicted item) recommended to the user.

In a possible implementation, the to-be-trained model is configured to: perform linear processing on the $i^{th}$ piece of first information, to obtain an $i^{th}$ piece of Q information, an $i^{th}$ piece of K information, and an $i^{th}$ piece of V information; and perform an operation on the $i^{th}$ piece of Q information, N pieces of K information, N pieces of V information, and N pieces of weight information corresponding to the $i^{th}$ behavior, to obtain an $i^{th}$ piece of second information, where a $j^{th}$ piece of weight information corresponding to the $i^{th}$ behavior is determined based on the $i^{th}$ behavior and a $j^{th}$ behavior, and j = 1, ..., N.

In a possible implementation, the to-be-trained model is further configured to: obtain N pieces of third information, where an $i^{th}$ piece of third information indicates the $i^{th}$ behavior; and perform an operation on the $i^{th}$ piece of third information and the N pieces of third information, to obtain N pieces of fourth information corresponding to the $i^{th}$ behavior, where a $j^{th}$ piece of fourth information corresponding to the $i^{th}$ behavior indicates a distance between the $i^{th}$ behavior and the $j^{th}$ behavior. The to-be-trained model is configured to perform an operation on the $i^{th}$ piece of Q information, the N pieces of K information, the N pieces of V information, the N pieces of weight information corresponding to the $i^{th}$ behavior, and the N pieces of fourth information corresponding to the $i^{th}$ behavior, to obtain the $i^{th}$ piece of second information.

In a possible implementation, the distance between the $i^{th}$ behavior and the $j^{th}$ behavior includes an interval between an order of the $i^{th}$ behavior and an order of the $j^{th}$ behavior.

In a possible implementation, the to-be-trained model is configured to: perform feature extraction on the N pieces of second information to obtain fifth information and sixth information, where the fifth information indicates a difference between the N behaviors, and the sixth information indicates a same point between the N behaviors; fuse the fifth information and the sixth information to obtain seventh information, where the seventh information indicates interest distribution of the user; and calculate matching degrees between the seventh information and K pieces of eighth information, where the matching degree is used as the item recommendation result, a $t^{th}$ piece of eighth information indicates a $t^{th}$ second item, and t = 1, ..., K.

In a possible implementation, the K second items include the N first items.

It should be noted that for descriptions of step 701, refer to related descriptions of step 401 to step 403 in the embodiment shown in FIG. 4. Details are not described herein again.

702: Obtain a target loss based on the predicted item recommendation result and a real item recommendation result, where the target loss indicates a difference between the predicted item recommendation result and the real item recommendation result.

After the predicted item recommendation result output by the to-be-trained model is obtained, because the real item recommendation result is known, the predicted item recommendation result and the real item recommendation result may be calculated by using a preset target loss function, to obtain the target loss. The target loss indicates the difference between the predicted item recommendation result and the real item recommendation result.

703: Update a parameter of the to-be-trained model based on the target loss until a model training condition is met, to obtain a target model.

After the target loss is obtained, the parameter of the to-be-trained model may be updated based on the target loss, and the to-be-trained model obtained after the parameter is updated continues to be trained by using a next batch of training data until the model training condition is met (for example, the target loss is convergent), to obtain the target model in the embodiment shown in FIG. 4.

The target model obtained through training in this embodiment of this application has a function of recommending an item to the user. When the target item of interest needs to be recommended to the user, the N pieces of first information may be first input to the target model. The $i^{th}$ piece of first information indicates the $i^{th}$ first item and the $i^{th}$ behavior. The $i^{th}$ behavior is a behavior of the user for the $i^{th}$ item. The N behaviors of the user correspond to M categories. i = 1, ..., N ≥ M, and M > 1. Then, the N pieces of first information may be processed by using the target model based on the multi-head self-attention mechanism, to obtain the N pieces of second information. Finally, the item recommendation result can be obtained by using the target model based on the N pieces of second information. The item recommendation result is used to determine, from the K second items, the target item recommended to the user, and K ≥ 1. In the foregoing process, the N pieces of first information not only indicate N first items, but also indicate the N behaviors that can be classified into the M categories. Therefore, in a process in which the target model processes the N pieces of first information to correspondingly obtain the N pieces of second information, not only mutual impact of a plurality of behaviors belonging to a same category and mutual impact of a plurality of first items may be considered, but also mutual impact of a plurality of behaviors belonging to different categories may be considered. Factors that are considered are comprehensive. Therefore, the item recommendation result output by the target model based on the N pieces of second information can have high accuracy, thereby helping optimize user experience.

Further, in a process of processing the N pieces of first information based on the multi-head self-attention mechanism, the target model further considers impact caused by an interval (for example, an interval between times at which the user performs different behaviors) between orders of different behaviors. Factors that are considered are more comprehensive in comparison with a related technology. The item recommendation result output by the target model may also accurately fit a real intention of the user, thereby further improving accuracy of the item recommendation result.

Further, in a training process of the target model, the used training data, that is, the N pieces of first information, indicates the N behaviors that can be classified into the M categories. The N behaviors may include behaviors such as a tap behavior, an add-to-favorites behavior, a search behavior, and an add-to-cart behavior, and may further include a purchase behavior. Therefore, in this embodiment of this application, not only a function of training data indicating a main behavior in model training is considered, but also a function of training data indicating an auxiliary behavior in model training is considered, so that the target model obtained through training may have good performance.

The foregoing describes in detail the model training method provided in embodiments of this application. The following describes an item recommendation apparatus and a model training device apparatus provided in embodiments of this application. FIG. 8 is a diagram of a structure of an item recommendation apparatus according to an embodiment of this application. As shown in FIG. 8, the apparatus includes:

a first obtaining module 801, configured to obtain N pieces of first information by using a target model, where an $i^{th}$ piece of first information indicates an $i^{th}$ first item and an $i^{th}$ behavior, the $i^{th}$ behavior is a behavior of a user for the $i^{th}$ item, N behaviors of the user correspond to M categories, i = 1, ..., N, N $\geq$ M, and M > 1;

a processing module 802, configured to process the N pieces of first information by using the target model based on a multi-head self-attention mechanism, to obtain N pieces of second information; and

a second obtaining module 803, configured to obtain an item recommendation result by using the target model based on the N pieces of second information, where the item recommendation result is used to determine, from K second items, a target item recommended to the user, and K $\geq$ 1.

In embodiments of this application, when the target item of interest needs to be recommended to the user, the N pieces of first information may be first input to the target model. The $i^{th}$ piece of first information indicates the $i^{th}$ first item and the $i^{th}$ behavior. The $i^{th}$ behavior is a behavior of the user for the $i^{th}$ item. The N behaviors of the user correspond to M categories. i = 1, ..., N $\geq$ M, and M > 1. Then, the N pieces of first information may be processed by using the target model based on the multi-head self-attention mechanism, to obtain the N pieces of second information. Finally, the item recommendation result can be obtained by using the target model based on the N pieces of second information. The item recommendation result is used to determine, from the K second items, the target item recommended to the user, and K $\geq$ 1. In the foregoing process, the N pieces of first information not only indicate N first items, but also indicate the N behaviors that can be classified into the M categories. Therefore, in a process in which the target model processes the N pieces of first information to correspondingly obtain the N pieces of second information, not only mutual impact of a plurality of behaviors belonging to a same category and mutual impact of a plurality of first items may be considered, but also mutual impact of a plurality of behaviors belonging to different categories may be considered. Factors that are considered are comprehensive. Therefore, the item recommendation result output by the target model based on the N pieces of second information can have high accuracy, thereby helping optimize user experience.

In a possible implementation, the processing module 802 is configured to: perform linear processing on the $i^{th}$ piece of first information by using the target model, to obtain an $i^{th}$ piece of Q information, an $i^{th}$ piece of K information, and an $i^{th}$ piece of V information; and perform an operation on the $i^{th}$ piece of Q information, N pieces of K information, N pieces of V information, and N pieces of weight information corresponding to the $i^{th}$ behavior by using the target model, to obtain an $i^{th}$ piece of second information, where a $j^{th}$ piece of weight information corresponding to the $i^{th}$ behavior is determined based on the $i^{th}$ behavior and a $j^{th}$ behavior, and j = 1, ..., N.

In a possible implementation, the apparatus further includes: a third obtaining module, configured to obtain N pieces of third information by using the target model, where an $i^{th}$ piece of third information indicates the $i^{th}$ behavior; an operation module, configured to perform an operation on the $i^{th}$ piece of third information and the N pieces of third information by using the target model to obtain N pieces of fourth information corresponding to the $i^{th}$ behavior, where a $j^{th}$ piece of fourth information corresponding to the $i^{th}$ behavior indicates a distance between the $i^{th}$ behavior and the $j^{th}$ behavior; and a processing module 802, configured to perform an operation on the $i^{th}$ piece of Q information, the N pieces of K information, the N pieces of V information, the N pieces of weight information corresponding to the $i^{th}$ behavior, and the N pieces of fourth information corresponding to the $i^{th}$ behavior by using the target model, to obtain the $i^{th}$ piece of second information.

In a possible implementation, the distance between the $i^{th}$ behavior and the $j^{th}$ behavior includes an interval between an order of the $i^{th}$ behavior and an order of the $j^{th}$ behavior.

In a possible implementation, the second obtaining module 803 is configured to: perform feature extraction on the N pieces of second information by using the target model to obtain fifth information and sixth information, where the fifth information indicates a difference between the N behaviors, and the sixth information indicates a same point between the N behaviors; fuse the fifth information and the sixth information by using the target model to obtain seventh information, where the seventh information indicates interest distribution of the user; and calculate matching degrees between the seventh information and K pieces of eighth information by using the target model, where the matching degree is used as the item recommendation result, a $t^{th}$ piece of eighth information indicates a $t^{th}$ second item, and t = 1, ..., K.

In a possible implementation, the K second items include the N first items.

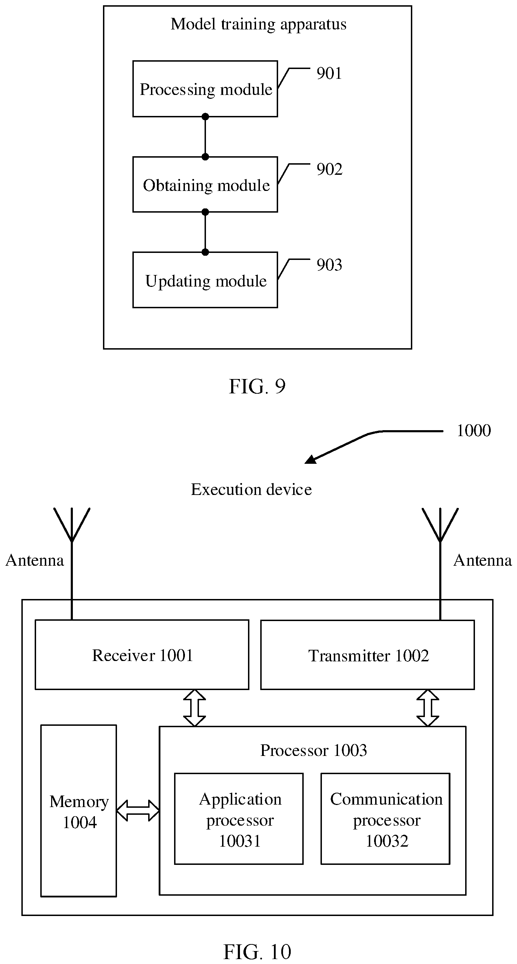

FIG. 9 is a diagram of a structure of a model training apparatus according to an embodiment of this application. As shown in FIG. 9, the apparatus includes:

a processing module 901, configured to input N pieces of first information into a to-be-trained model to obtain a predicted item recommendation result, where the to-be-trained model is configured to: obtain the N pieces of first information, where an $i^{th}$ piece of first information indicates an $i^{th}$ first item and an $i^{th}$ behavior, the $i^{th}$ behavior is a behavior of a user for the $i^{th}$ item, N behaviors of the user correspond to M categories, i = 1, ..., N, N ≥ M, and M > 1; process the N pieces of first information based on a multi-head attention mechanism, to obtain N pieces of second information; and obtain the predicted item recommendation result based on the N pieces of second information, where the predicted item recommendation result is used to determine, from K second items, a target item recommended to the user, and K ≥ 1;

an obtaining module 902, configured to obtain a target loss based on the predicted item recommendation result and a real item recommendation result, where the target loss indicates a difference between the predicted item recommendation result and the real item recommendation result; and

an updating module 903, configured to update a parameter of the to-be-trained model based on the target loss until a model training condition is met, to obtain a target model.

The target model obtained through training in this embodiment of this application has a function of recommending an item to the user. When the target item of interest needs to be recommended to the user, the N pieces of first information may be first input to the target model. The $i^{th}$ piece of first information indicates the $i^{th}$ first item and the $i^{th}$ behavior. The $i^{th}$ behavior is a behavior of the user for the $i^{th}$ item. The N behaviors of the user correspond to M categories. i = 1, ..., N ≥ M, and M > 1. Then, the N pieces of first information may be processed by using the target model based on the multi-head self-attention mechanism, to obtain the N pieces of second information. Finally, the item recommendation result can be obtained by using the target model based on the N pieces of second information. The item recommendation result is used to determine, from the K second items, the target item recommended to the user, and K ≥ 1. In the foregoing process, the N pieces of first information not only indicate N first items, but also indicate the N behaviors that can be classified into the M categories. Therefore, in a process in which the target model processes the N pieces of first information to correspondingly obtain the N pieces of second information, not only mutual impact of a plurality of behaviors belonging to a same category and mutual impact of a plurality of first items may be considered, but also mutual impact of a plurality of behaviors belonging to different categories may be considered. Factors that are considered are comprehensive. Therefore, the item recommendation result output by the target model based on the N pieces of second information can have high accuracy, thereby helping optimize user experience.

In a possible implementation, the to-be-trained model is configured to: perform linear processing on the $i^{th}$ piece of first information, to obtain an $i^{th}$ piece of Q information, an $i^{th}$ piece of K information, and an $i^{th}$ piece of V information; and perform an operation on the $i^{th}$ piece of Q information, N pieces of K information, N pieces of V information, and N pieces of weight information corresponding to the $i^{th}$ behavior, to obtain an $i^{th}$ piece of second information, where a $j^{th}$ piece of weight information corresponding to the $i^{th}$ behavior is determined based on the $i^{th}$ behavior and a $j^{th}$ behavior, and j = 1, ..., N.

In a possible implementation, the to-be-trained model is further configured to: obtain N pieces of third information, where an $i^{th}$ piece of third information indicates the $i^{th}$ behavior; and perform an operation on the $i^{th}$ piece of third information and the N pieces of third information, to obtain N pieces of fourth information corresponding to the $i^{th}$ behavior, where a $j^{th}$ piece of fourth information corresponding to the $i^{th}$ behavior indicates a distance between the $i^{th}$ behavior and the $j^{th}$ behavior. The to-be-trained model is configured to perform an operation on the $i^{th}$ piece of Q information, the N pieces of K information, the N pieces of V information, the N pieces of weight information corresponding to the $i^{th}$ behavior, and the N pieces of fourth information corresponding to the $i^{th}$ behavior, to obtain the $i^{th}$ piece of second information.

In a possible implementation, the distance between the $i^{th}$ behavior and the $j^{th}$ behavior includes an interval between an order of the $i^{th}$ behavior and an order of the $j^{th}$ behavior. In a possible implementation, the to-be-trained model is configured to: perform feature extraction on the N pieces of second information to obtain fifth information and sixth information, where the fifth information indicates a difference between the N behaviors, and the sixth information indicates a same point between the N behaviors; fuse the fifth information and the sixth information to obtain seventh information, where the seventh information indicates interest distribution of the user; and calculate matching degrees between the seventh information and K pieces of eighth information, where the matching degree is used as the item recommendation result, a $t^{th}$ piece of eighth information indicates a $t^{th}$ second item, and t = 1, ..., K.

In a possible implementation, the K second items include the N first items.

It should be noted that content such as information exchange between the modules/units of the apparatuses and an execution process is based on the same concept as that of the method embodiments of this application, and produces the same technical effects as those of the method embodiments of this application. For specific content, refer to the foregoing descriptions in the method embodiments of this application. Details are not described herein again.

An embodiment of this application further relates to an execution device. FIG. 10 is a diagram of a structure of an execution device according to an embodiment of this application. As shown in FIG. 10, the execution device 1000 may be specifically represented as a mobile phone, a tablet computer, a notebook computer, an intelligent wearable device, a server, or the like. This is not limited herein. The item recommendation apparatus described in the embodiment corresponding to FIG. 8 may be deployed on the execution device 1000, and is configured to implement a function of item recommendation in the embodiment corresponding to FIG. 4. Specifically, the execution device 1000 includes: a receiver 1001, a transmitter 1002, a processor 1003, and a memory 1004 (there may be one or more processors 1003 in the execution device 1000, and one processor is used as an example in FIG. 10). The processor 1003 may include an application processor 10031 and a communication processor 10032. In some embodiments of this application, the receiver 1001, the transmitter 1002, the processor 1003, and the memory 1004 may be connected through a bus or in another manner.

The memory 1004 may include a read-only memory and a random access memory, and provide instructions and data for the processor 1003. A part of the memory 1004 may further include a non-volatile random access memory (non-volatile random access memory, NVRAM). The memory 1004 stores a processor and operation instructions, an executable module or a data structure, a subnet thereof, or an extended set thereof. The operation instructions may include various operation instructions for various operations.

The processor 1003 controls an operation of the execution device. During specific application, the components of the execution device are coupled together through a bus system. In addition to a data bus, the bus system may further include a power bus, a control bus, a status signal bus, and the like. However, for clear description, various types of buses in the figure are referred to as the bus system.

The method disclosed in embodiments of this application may be applied to the processor 1003, or may be implemented by the processor 1003. The processor 1003 may be an integrated circuit chip, and has a signal processing capability. In an implementation process, steps in the methods can be implemented by using a hardware integrated logic circuit in the processor 1003, or by using instructions in a form of software. The processor 1003 may be a general-purpose processor, a digital signal processor (digital signal processor, DSP), a microprocessor, or a microcontroller. The processor 1003 may further include an application-specific integrated circuit (application-specific integrated circuit, ASIC), a field programmable gate array (field programmable gate array, FPGA) or another programmable logic device, a discrete gate, a transistor logic device, or a discrete hardware component. The processor 1003 may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory 1004, and the processor 1003 reads information in the memory 1004 and completes the steps in the foregoing methods in combination with hardware of the processor.

The receiver 1001 may be configured to receive input digital or character information, and generate a signal input related to setting and function control of the execution device. The transmitter 1002 may be configured to output the digital or character information through a first interface. The transmitter 1002 may be configured to send instructions to a disk group through the first interface, to modify data in the disk group. The transmitter 1002 may further include a display device such as a display.

In this embodiment of this application, in one case, the processor 1003 is configured to process the user-associated information by using the target model in the embodiment corresponding to FIG. 4, to obtain the item recommendation result.

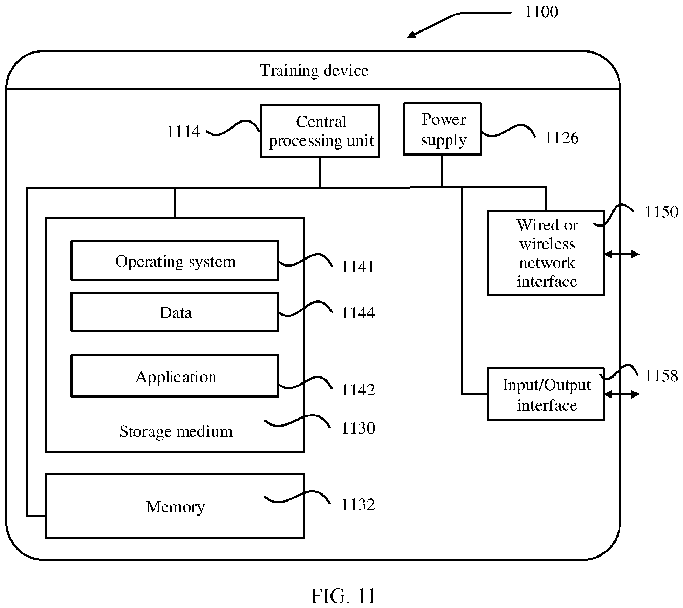

An embodiment of this application further relates to a training device. FIG. 11 is a diagram of a structure of a training device according to an embodiment of this application. As shown in FIG. 11, the training device 1100 is implemented by one or more servers. The training device 1100 may greatly differ due to different configurations or performance, and may include one or more central processing units (central processing units, CPU) 1114 (for example, one or more processors), a memory 1132, one or more storage media 1130 (for example, one or more mass storage devices) that store an application 1142 or data 1144. The memory 1132 and the storage medium 1130 may perform transitory storage or persistent storage. A program stored in the storage medium 1130 may include one or more modules (not shown in the figure), and each module may include a series of instruction operations on the training device. Further, the central processing unit 1114 may be configured to communicate with the storage medium 1130, and perform the series of instruction operations in the storage medium 1130 on the training device 1100.

The training device 1100 may further include one or more power supplies 1126, one or more wired or wireless network interfaces 1150, one or more input/output interfaces 1158, or one or more operating systems 1141, for example, Windows ServerTM, Mac OS XTM, UnixTM, LinuxTM, and FreeBSDTM.

Specifically, the training device may perform the model training method in the embodiment corresponding to FIG. 7.

An embodiment of this application further relates to a computer-readable storage medium. The computer-readable storage medium stores a program used for signal processing. When the program runs on a computer, the computer is enabled to perform the steps performed by the foregoing execution device, or the computer is enabled to perform the steps performed by the foregoing training device.

An embodiment of this application further relates to a computer program product. The computer program product stores instructions. When the instructions are executed by a computer, the computer is enabled to perform the steps performed by the foregoing execution device, or the computer is enabled to perform the steps performed by the foregoing training device.

The execution device, the training device, or the terminal device provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, so that a chip in the execution device performs the data processing method described in embodiments, or a chip in the training device performs the data processing method described in embodiments. Optionally, the storage unit is a storage unit in the chip, for example, a register or a cache. Alternatively, the storage unit may be a storage unit in a wireless access device but outside the chip, for example, a read-only memory (read-only memory, ROM), another type of static storage device that can store static information and instructions, or a random access memory (random access memory, RAM).

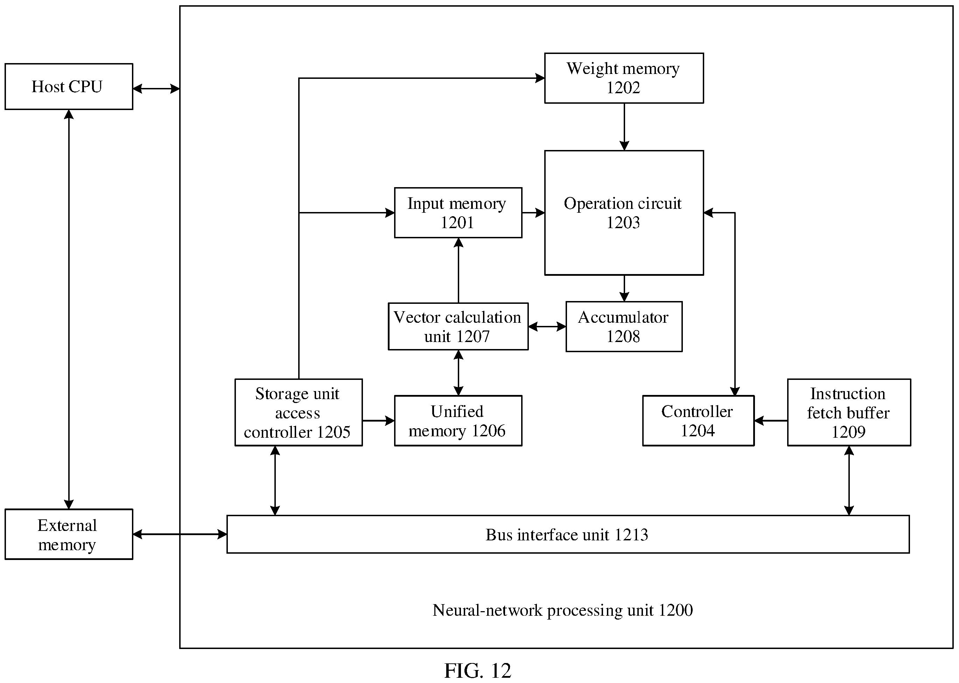

Specifically, FIG. 12 is a diagram of a structure of a chip according to an embodiment of this application. The chip may be represented as a neural-network processing unit NPU 1200. The NPU 1200 is mounted to a host CPU (Host CPU) as a coprocessor, and the host CPU allocates a task. A core part of the NPU is an operation circuit 1203, and a controller 1204 controls the operation circuit 1203 to extract matrix data in a memory and perform a multiplication operation.

In some implementations, the operation circuit 1203 includes a plurality of processing engines (process engine, PE) inside. In some implementations, the operation circuit 1203 is a two-dimensional systolic array. The operation circuit 1203 may alternatively be a one-dimensional systolic array or another electronic circuit capable of performing mathematical operations such as multiplication and addition. In some implementations, the operation circuit 1203 is a general-purpose matrix processor.

For example, it is assumed that there is an input matrix A, a weight matrix B, and an output matrix C. The operation circuit fetches, from a weight memory 1202, data corresponding to the matrix B, and caches the data on each PE in the operation circuit. The operation circuit fetches data of the matrix A from an input memory 1201, to perform a matrix operation on the matrix B, and stores an obtained partial result or an obtained final result of the matrix in an accumulator (accumulator) 1208.

A unified memory 1206 is configured to store input data and output data. Weight data is directly transferred to the weight memory 1202 by using a storage unit access controller DMAC (Direct Memory Access Controller, DMAC) 1205. The input data is also transferred to the unified memory 1206 by using the DMAC.

A BIU is a bus interface unit, namely, a bus interface unit 1213, and is configured to perform interaction between an AXI bus and the DMAC and between the AXI bus and an instruction fetch buffer (Instruction Fetch Buffer, IFB) 1209.

The bus interface unit (Bus Interface Unit, BIU for short) 1213 is used by the instruction fetch buffer 1209 to obtain instructions from an external memory, and is further used by the storage unit access controller 1205 to obtain original data of the input matrix A or the weight matrix B from the external memory.

The DMAC is mainly configured to transfer input data in the external memory DDR to the unified memory 1206, transfer weight data to the weight memory 1202, or transfer input data to the input memory 1201.

A vector calculation unit 1207 includes a plurality of operation processing units. If required, further processing is performed on an output of the operation circuit 1203, for example, vector multiplication, vector addition, an exponential operation, a logarithmic operation, or a value comparison. The vector calculation unit 1207 is mainly configured to perform network computation at a non-convolutional/fully-connected layer of a neural network, for example, batch normalization (batch normalization), pixel-level summation, and upsampling of a predicted label plane.

In some implementations, the vector calculation unit 1207 can store a processed output vector in the unified memory 1206. For example, the vector calculation unit 1207 may apply a linear function or a non-linear function to the output of the operation circuit 1203. For example, linear interpolation is performed on a predicted label plane extracted at a convolutional layer. For another example, vectors whose values are accumulated are used to generate an activation value. In some implementations, the vector calculation unit 1207 generates a normalized value, a pixel-level summation value, or both a normalized value and a pixel-level summation value. In some implementations, the processed output vector can be used as an activation input to the operation circuit 1203, for example, used at a subsequent layer in the neural network.

The instruction fetch buffer (instruction fetch buffer) 1209 connected to the controller 1204 is configured to store instructions used by the controller 1204.

The unified memory 1206, the input memory 1201, the weight memory 1202, and the instruction fetch buffer 1209 are all on-chip memories. The external memory is private to a hardware architecture of the NPU.

Any one of the processors mentioned above may be a general-purpose central processing unit, a microprocessor, an ASIC, or one or more integrated circuits for controlling program execution.

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected according to actual needs to achieve the objectives of the solutions of embodiments. In addition, in the accompanying drawings of the apparatus embodiments provided in this application, a connection relationship between modules indicates that the modules have a communication connection with each other, and may be specifically implemented as one or more communication buses or signal cables.

Based on the description of the foregoing implementations, a person skilled in the art may clearly understand that this application may be implemented by software in addition to necessary universal hardware, or by dedicated hardware, including an application-specific integrated circuit, a dedicated CPU, a dedicated memory, a dedicated component, and the like. Usually, any function implemented by a computer program may be easily implemented by using corresponding hardware. In addition, specific hardware structures used to implement a same function may be various, for example, an analog circuit, a digital circuit, or a dedicated circuit. However, in this application, a software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods in embodiments of this application.

All or some of the foregoing embodiments may be implemented by using software, hardware, firmware, or any combination thereof. When software is used to implement embodiments, the foregoing embodiments may be implemented completely or partially in a form of a computer program product.

The computer program product includes one or more computer instructions. When the computer program instructions are loaded and executed on the computer, the procedures or functions according to embodiments of this application are completely or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, for example, a training device or a data center, integrating one or more usable media. The usable medium may be a magnetic medium (for example, a floppy disk, a hard disk, or a magnetic tape), an optical medium (for example, a DVD), a semiconductor medium (for example, a solid state drive (Solid State Disk, SSD)), or the like.

**Claims**

1. An item recommendation method, wherein the method is implemented by using a target model, and the method comprises:

obtaining N pieces of first information, wherein an $i^{th}$ piece of first information indicates an $i^{th}$ first item and an $i^{th}$ behavior, the $i^{th}$ behavior is a behavior of the user for the $i^{th}$ item, N behaviors of the user correspond to M categories, $i = 1, ..., N$, $N \geq M$, and $M > 1$;
processing the N pieces of first information based on a multi-head self-attention mechanism, to obtain N pieces of second information; and

obtaining an item recommendation result based on the N pieces of second information, wherein the item recommendation result is used to determine, from K second items, a target item recommended to the user, and K ≥ 1.

2. The method according to claim 1, wherein the processing the N pieces of first information based on a multi-head attention mechanism, to obtain N pieces of second information comprises:

performing linear processing on the $i^{th}$ piece of first information, to obtain an $i^{th}$ piece of Q information, an $i^{th}$ piece of K information, and an $i^{th}$ piece of V information; and

performing an operation on the $i^{th}$ piece of Q information, N pieces of K information, N pieces of V information, and N pieces of weight information corresponding to the $i^{th}$ behavior, to obtain an $i^{th}$ piece of second information, wherein a $j^{th}$ piece of weight information corresponding to the $i^{th}$ behavior is determined based on the $i^{th}$ behavior and a $j^{th}$ behavior, and j = 1, ..., N.

3. The method according to claim 2, wherein the method further comprises:

obtaining N pieces of third information, wherein an $i^{th}$ piece of third information indicates the $i^{th}$ behavior; and

performing an operation on the $i^{th}$ piece of third information and the N pieces of third information, to obtain N pieces of fourth information corresponding to the $i^{th}$ behavior, wherein a $j^{th}$ piece of fourth information corresponding to the $i^{th}$ behavior indicates a distance between the $i^{th}$ behavior and the $j^{th}$ behavior; and

the performing an operation on the $i^{th}$ piece of Q information, N pieces of K information, N pieces of V information, and N pieces of weight information corresponding to the $i^{th}$ behavior, to obtain an $i^{th}$ piece of second information comprises:

performing an operation on the $i^{th}$ piece of Q information, the N pieces of K information, the N pieces of V information, the N pieces of weight information corresponding to the $i^{th}$ behavior, and the N pieces of fourth information corresponding to the $i^{th}$ behavior, to obtain the $i^{th}$ piece of second information.

4. The method according to claim 3, wherein the distance between the $i^{th}$ behavior and the $j^{th}$ behavior comprises an interval between an order of the $i^{th}$ behavior and an order of the $j^{th}$ behavior.

5. The method according to any one of claims 1 to 4, wherein the obtaining an item recommendation result based on the N pieces of second information comprises:

performing feature extraction on the N pieces of second information to obtain fifth information and sixth information, wherein the fifth information indicates a difference between the N behaviors, and the sixth information indicates a same point between the N behaviors;

fusing the fifth information and the sixth information to obtain seventh information, wherein the seventh information indicates interest distribution of the user; and

calculating matching degrees between the seventh information and K pieces of eighth information, wherein the matching degree is used as the item recommendation result, a $t^{th}$ piece of eighth information indicates a $t^{th}$ second item, and t = 1, ..., K.

6. The method according to claim 5, wherein the K second items comprise the N first items.

7. A model training method, wherein the method comprises:

inputting N pieces of first information into a to-be-trained model to obtain a predicted item recommendation result, wherein the to-be-trained model is configured to: obtain the N pieces of first information, wherein an $i^{th}$ piece of first information indicates an $i^{th}$ first item and an $i^{th}$ behavior, the $i^{th}$ behavior is a behavior of the user for the $i^{th}$ item, N behaviors of the user correspond to M categories, i = 1, ..., N, N ≥ M, and M > 1; process the N pieces of first information based on a multi-head attention mechanism, to obtain N pieces of second information; and obtain the predicted item recommendation result based on the N pieces of second information, wherein the predicted item recommendation result is used to determine, from K second items, a target item recommended to the user, and K ≥ 1;

obtaining a target loss based on the predicted item recommendation result and the real item recommendation result, wherein the target loss indicates a difference between the predicted item recommendation result and the real item recommendation result; and

updating a parameter of the to-be-trained model based on the target loss until a model training condition is met, to obtain a target model.

8. The method according to claim 7, wherein the to-be-trained model is configured to:

perform linear processing on the $i^{th}$ piece of first information, to obtain an $i^{th}$ piece of Q information, an $i^{th}$ piece of K information, and an $i^{th}$ piece of V information; and
perform an operation on the $i^{th}$ piece of Q information, N pieces of K information, N pieces of V information, and N pieces of weight information corresponding to the $i^{th}$ behavior, to obtain an $i^{th}$ piece of second information, wherein a $j^{th}$ piece of weight information corresponding to the $i^{th}$ behavior is determined based on the $i^{th}$ behavior and a $j^{th}$ behavior, and j = 1, ..., N.

9. The method according to claim 8, wherein the to-be-trained model is further configured to:

obtain N pieces of third information, wherein an $i^{th}$ piece of third information indicates the $i^{th}$ behavior; and
perform an operation on the $i^{th}$ piece of third information and the N pieces of third information, to obtain N pieces of fourth information corresponding to the $i^{th}$ behavior, wherein a $j^{th}$ piece of fourth information corresponding to the $i^{th}$ behavior indicates a distance between the $i^{th}$ behavior and the $j^{th}$ behavior; and
the to-be-trained model is configured to perform an operation on the $i^{th}$ piece of Q information, the N pieces of K information, the N pieces of V information, the N pieces of weight information corresponding to the $i^{th}$ behavior, and the N pieces of fourth information corresponding to the $i^{th}$ behavior, to obtain the $i^{th}$ piece of second information.

10. The method according to claim 9, wherein the distance between the $i^{th}$ behavior and the $j^{th}$ behavior comprises an interval between an order of the $i^{th}$ behavior and an order of the $j^{th}$ behavior.

11. The method according to any one of claims 7 to 10, wherein the to-be-trained model is configured to:

perform feature extraction on the N pieces of second information to obtain fifth information and sixth information, wherein the fifth information indicates a difference between the N behaviors, and the sixth information indicates a same point between the N behaviors;
fuse the fifth information and the sixth information to obtain seventh information, wherein the seventh information indicates interest distribution of the user; and
calculate matching degrees between the seventh information and K pieces of eighth information, wherein the matching degree is used as the item recommendation result, a $t^{th}$ piece of eighth information indicates a $t^{th}$ second item, and t = 1, ..., K.

12. The method according to claim 11, wherein the K second items comprise the N first items.

13. An item recommendation apparatus, wherein the apparatus comprises:

a first obtaining module, configured to obtain N pieces of first information by using a target model, wherein an $i^{th}$ piece of first information indicates an $i^{th}$ first item and an $i^{th}$ behavior, the $i^{th}$ behavior is a behavior of a user for the $i^{th}$ item, N behaviors of the user correspond to M categories, i = 1, ..., N, N $\geq$ M, and M > 1;
a processing module, configured to process the N pieces of first information by using the target model based on a multi-head self-attention mechanism, to obtain N pieces of second information; and
a second obtaining module, configured to obtain an item recommendation result by using the target model based on the N pieces of second information, wherein the item recommendation result is used to determine, from K second items, a target item recommended to the user, and K $\geq$ 1.

14. A model training apparatus, wherein the apparatus comprises:

a processing module, configured to input N pieces of first information into a to-be-trained model to obtain a predicted item recommendation result, wherein the to-be-trained model is configured to: obtain the N pieces of first information, wherein an $i^{th}$ piece of first information indicates an $i^{th}$ first item and an $i^{th}$ behavior, the $i^{th}$ behavior is a behavior of a user for the $i^{th}$ item, N behaviors of the user correspond to M categories, i = 1, ..., N, N $\geq$ M, and M > 1; process the N pieces of first information based on a multi-head attention mechanism, to obtain N pieces of second information; and obtain the predicted item recommendation result based on the N pieces of second information, wherein the predicted item recommendation result is used to determine, from K second items, a target item recommended to the user, and K ≥ 1;

an obtaining module, configured to obtain a target loss based on the predicted item recommendation result and the real item recommendation result, wherein the target loss indicates a difference between the predicted item recommendation result and the real item recommendation result; and

an updating module, configured to update a parameter of the to-be-trained model based on the target loss until a model training condition is met, to obtain a target model.

15. An item recommendation apparatus, wherein the apparatus comprises a memory and a processor, the memory stores code, the processor is configured to execute the code, and when the code is executed, the item recommendation apparatus performs the method according to any one of claims 1 to 12.

16. A computer storage medium, wherein the computer storage medium stores one or more instructions, and when the instruction is executed by one or more computers, the one or more computers are enabled to implement the method according to any one of claims 1 to 12.

17. A computer program product, wherein the computer program product stores instructions, and when the instructions are executed by a computer, the computer is enabled to perform the method according to any one of claims 1 to 12.

Intelligent information chain

Smart product and industry application

Translation/Text analysis/... | Voice/Vision/Image/...

Data

Data processing: | Data training/Machine learning/ Deep learning | Searching/ Inference/Decision making | ...

Infrastructure | Sensor | Smart chip | Basic platform | ...

IT value chain

EP 4 528 547 A1

FIG. 1

EP 4 528 547 A1

FIG. 2a

FIG. 2b

User

Smart terminal

13:21

Interactive interface

Application

Item recommendation result for the application

Memory

Processor:

Data training/Machine learning/Deep learning

Searching/ Inference/ Decision making

...

Smart terminal

EP 4 528 547 A1

FIG. 2c

FIG. 3

Obtain N pieces of first information, where an $i^{th}$ piece of first information indicates an $i^{th}$ first item and an $i^{th}$ behavior, the $i^{th}$ behavior is a behavior of a user for the $i^{th}$ item, N behaviors of the user correspond to M categories, i = 1, ..., N, N ≥ M, and M > 1                                401

Process the N pieces of first information by using a target model based on a multi-head self-attention mechanism, to obtain N pieces of second information                402

Obtain an item recommendation result by using the target model based on the N pieces of second information, where the item recommendation result is used to determine, from K second items, a target item recommended to the user, and K ≥ 1                403

FIG. 4

N pieces of first information

N pieces of third information

N pieces of third information → First module ← Second module

N pieces of second information

N pieces of third information → Third module

Target model

Item recommendation result

FIG. 5

FIG. 6

Input N pieces of first information into a to-be-trained model to obtain a predicted item recommendation result, where the to-be-trained model is configured to: obtain the N pieces of first information, where an $i^{th}$ piece of first information indicates an $i^{th}$ first item and an $i^{th}$ behavior, the $i^{th}$ behavior is a behavior of a user for the $i^{th}$ item, N behaviors of the user correspond to M categories, i = 1, ..., N, N ≥ M, and M > 1; process the N pieces of first information based on a multi-head attention mechanism, to obtain N pieces of second information; and obtain the predicted item recommendation result based on the N pieces of second information, where the predicted item recommendation result is used to determine, from K second items, a target item recommended to the user, and K ≥ 1

— 701

Obtain a target loss based on the predicted item recommendation result and a real item recommendation result, where the target loss indicates a difference between the predicted item recommendation result and the real item recommendation result

— 702

Update a parameter of the to-be-trained model based on the target loss until a model training condition is met, to obtain a target model

— 703

FIG. 7

Item recommendation apparatus

First obtaining module — 801

Processing module — 802

Second obtaining module — 803

FIG. 8

Model training apparatus

Processing module — 901

Obtaining module — 902

Updating module — 903

FIG. 9

1000

Execution device

Antenna

Antenna

Receiver 1001

Transmitter 1002

Processor 1003

Memory 1004

Application processor 10031

Communication processor 10032

FIG. 10

1100

Training device

1114 — Central processing unit

Power supply — 1126

1150

Wired or wireless network interface

Operating system — 1141

Data — 1144

Application — 1142

Storage medium — 1130

Input/Output interface — 1158

Memory — 1132

FIG. 11

FIG. 12

## INTERNATIONAL SEARCH REPORT

| International application No. |
| --- |
| **PCT/CN2023/101248** |

| A. CLASSIFICATION OF SUBJECT MATTER |
| --- |
| G06F16/9535(2019.01)i |
| According to International Patent Classification (IPC) or to both national classification and IPC |

| B. FIELDS SEARCHED |
| --- |
| Minimum documentation searched (classification system followed by classification symbols) |
| G06F |
| Documentation searched other than minimum documentation to the extent that such documents are included in the fields searched |
| Electronic data base consulted during the international search (name of data base and, where practicable, search terms used) |
| VEN, CNABS, CNTXT, WOTXT, EPTXT, USTXT: 项目, 特征, 行为, 分类, 类别, 推荐, 权重, 注意力, 交互, 历史, 点击, item, feature, behavior, category+, classi+, recommendat+, weight, attention, alternat+, history+, click |

| C. DOCUMENTS CONSIDERED TO BE RELEVANT |  |  |
| --- | --- | --- |
| Category* | Citation of document, with indication, where appropriate, of the relevant passages | Relevant to claim No. |
| PX | CN 115292583 A (HUAWEI TECHNOLOGIES CO., LTD.) 04 November 2022 (2022-11-04) claims 1-17 | 1-17 |
| X | CN 114529077 A (HARBIN ENGINEERING UNIVERSITY) 24 May 2022 (2022-05-24) description, paragraphs 0066-0113 | 1-17 |
| X | CN 112712418 A (TENCENT TECHNOLOGY (SHENZHEN) CO., LTD.) 27 April 2021 (2021-04-27) description, paragraphs 0032-0101 | 1-17 |
| A | CN 110990624 A (SHANGHAI XIMALAYA TECHNOLOGY CO., LTD.) 10 April 2020 (2020-04-10) entire document | 1-17 |
| A | CN 111737573 A (BEIJING SANKUAI ONLINE TECHNOLOGY CO., LTD.) 02 October 2020 (2020-10-02) entire document | 1-17 |
| A | US 2022058714 A1 (SALESFORCE.COM INC.) 24 February 2022 (2022-02-24) entire document | 1-17 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **11 September 2023** | **14 September 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

<table>
<tr><td colspan="2"><strong>INTERNATIONAL SEARCH REPORT</strong><br>Information on patent family members</td><td>International application No.<br><br><strong>PCT/CN2023/101248</strong></td></tr>
</table>

| Patent document<br>cited in search report | Publication date<br>(day/month/year) | Patent family member(s) | | | Publication date<br>(day/month/year) |
|---|---|---|---|---|---|
| CN 115292583 A | 04 November 2022 | None | | | |
| CN 114529077 A | 24 May 2022 | None | | | |
| CN 112712418 A | 27 April 2021 | None | | | |
| CN 110990624 A | 10 April 2020 | None | | | |
| CN 111737573 A | 02 October 2020 | None | | | |
| US 2022058714 A1 | 24 February 2022 | WO | 2022039902 | A1 | 24 February 2022 |
| | | EP | 4200761 | A1 | 28 June 2023 |

Form PCT/ISA/210 (patent family annex) (July 2022)

40

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210705920